(19) **Europäisches Patentamt / European Patent Office / Office européen des brevets**

(11) **EP 4 751 937 A1**

(12) **EUROPEAN PATENT APPLICATION**

(43) Date of publication:
03.06.2026 Bulletin 2026/23

(21) Application number: 25209941.1

(22) Date of filing: 21.10.2025

(51) International Patent Classification (IPC):
*B60C 11/03* (2006.01)       *B60C 11/11* (2006.01)
*B60C 11/13* (2006.01)       *B60C 1/00* (2006.01)
*B60C 11/12* (2006.01)

(52) Cooperative Patent Classification (CPC):
**B60C 11/0306; B60C 1/0016; B60C 11/033;
B60C 11/11; B60C 11/1323; B60C 11/1376;**
B60C 2011/0016; B60C 2011/0025;
B60C 2011/0033; B60C 2011/0337; B60C 2200/10;
B60C 2200/14

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 28.11.2024 JP 2024207569

(71) Applicant: **Sumitomo Rubber Industries, Ltd.**
**Kobe-shi, Hyogo 651-0072 (JP)**

(72) Inventor: **SHUJI, Kobori**
**Kobe-shi, Hyogo, 651-0072 (JP)**

(74) Representative: **Manitz Finsterwald**
**Patent- und Rechtsanwaltspartnerschaft mbB**
**Martin-Greif-Straße 1**
**80336 München (DE)**

(54) **TIRE**

(57) Provided is a tire comprising a tread part provided with a plurality of blocks, wherein the tread part is composed of a rubber composition comprising a rubber component, and wherein L is less than 30, 75°C $M_{300}$ is 5.0 or more, and L, 70°C tan δ, and 75°C $M_{300}$ satisfy the following inequality (1):

$$(L^{0.5} \times 70°C \ \tan δ)/75°C \ M_{300} \geq 0.13 \ (1)$$

where L represents a land ratio, in %, of the tread part, 70°C tan δ represents a tan δ at 70°C of the rubber composition, and 75°C $M_{300}$ represents a modulus, in MPa, at 300% elongation at 75°C of the rubber composition.

**Description**

TECHNICAL FIELD

The present invention relates to a tire.

BACKGROUND OF THE INVENTION

JP 2012-136186 A proposes a tire for automated two-wheeled vehicle in which slits are provided in crown blocks in order to improve grip performance during running in an uneven area.

SUMMARY OF THE INVENTION

However, there is still room for improvement in terms of grip performance during running in an uneven area.

It is an object of the present invention to provide a tire that can improve in grip performance during running in an uneven area.

The present invention relates to a tire comprising a tread part provided with a plurality of blocks, wherein the tread part is composed of a rubber composition comprising a rubber component, and wherein L is less than 30, 75°C $M_{300}$ is 5.0 or more, and L, 70°C tan $\delta$, and 75°C $M_{300}$ satisfy the following inequality (1):

$$(L^{0.5} \times 70°C \text{ tan } \delta)/75°C \text{ } M_{300} \geq 0.13 \text{ (1)}$$

where L represents a land ratio, in %, of the tread part, 70°C tan $\delta$ represents a tan $\delta$ at 70°C of the rubber composition, and 75°C $M_{300}$ represents a modulus, in MPa, at 300% elongation at 75°C of the rubber composition.

According to the present invention, provided is a tire that can improve grip performance during running in an uneven area.

BRIEF DESCRIPTION OF THE DRAWINGS

FIG. 1 is a meridional cross-sectional view of a tire relating to one embodiment of the present invention.
FIG. 2 is a development view of a tread part relating to the present embodiment.
FIG. 3 is a cross-sectional view of a middle block and a shoulder block.
FIG. 4 is a perspective view of a block.

DETAILED DESCRIPTION

The tire that is one embodiment of the present invention is a tire comprising a tread part provided with a plurality of blocks, wherein the tread part is composed of a rubber composition comprising a rubber component, and wherein L is less than 30, 75°C $M_{300}$ is 5.0 or more, and L, 70°C tan $\delta$, and 75°C $M_{300}$ satisfy the following inequality (1):

$$(L^{0.5} \times 70°C \text{ tan } \delta)/75°C \text{ } M_{300} \geq 0.13 \text{ (1)}$$

where L represents a land ratio, in %, of the tread part, 70°C tan $\delta$ represents a tan $\delta$ at 70°C of the rubber composition, and 75°C $M_{300}$ represents a modulus, in MPa, at 300% elongation at 75°C of the rubber composition.

Although it is not intended to be bound by a theory, for example, the following can be considered as a mechanism for improving grip performance of the tire of the present invention during running in an uneven area.

(A) By setting the land ratio of the tread part to less than 30%, a decrease in anchor friction due to mud getting stuck in gaps between blocks can be prevented. Therefore, it is considered that a total grip can be improved by achieving both anchor friction and hysteresis friction.

(B) By setting 75°C $M_{300}$ of the rubber composition constituting the tread part to 5.0 MPa or more, it is considered that anchor friction can be secured.

(C) On the other hand, if a value of 75°C $M_{300}$ of the rubber composition constituting the tread part is small, a block itself on the tread surface can move flexibly during running. Therefore, hysteresis friction can be increased by the block following the road surface. Here, it is considered that hysteresis friction can be further increased by making the land ratio L, 70°C tan $\delta$ of the rubber composition constituting the tread part, and 75°C $M_{300}$ of the rubber composition constituting the tread part to satisfy the inequality (1).

With cooperation of the above-described (A), (B), and (C), both anchor friction and hysteresis friction can be achieved, so that it is considered that a remarkable effect of improving grip performance on both soft and hard road surfaces, that is, improving grip performance on uneven road surfaces is achieved.

H/70°C tan $\delta$ is preferably less than 95, where H represents a height, in mm, of the block.

If the height of the block is high, an external force such as driving control and the like may cause the block to collapse, reducing a ground-contacting area of the block tread surface, which raises a concern about reduced hysteresis friction. If H/70°C tan $\delta$ is set within the above-described range and a value of the height H of the block is large, it is considered that hysteresis required for grip can be secured by increasing a value of 70°C tan $\delta$ of the tread rubber.

The rubber composition preferably comprises 50 parts by mass or more of silica based on 100 parts by mass of the rubber component.

When the content of silica is set within the above-described range, it is considered that not only grip performance on a dry road surface can be improved, but also a decrease in grip performance on a wet road surface can be suppressed.

The tire relating to the present embodiment preferably has 25 or more blocks on a circumference of the tire, some or all of which are present in a crown part, where the crown part represent a region that is 30% of a grounding surface width of the tread part with a tire equator centered.

By increasing the number of blocks present in the crown part, the number of times edges of the blocks scratch the road surface increases, which is considered to make it easier to generate anchor friction.

A total styrene amount in the rubber component is preferably 30% by mass or more from the viewpoint of promoting heat generation of the tread rubber to further improve grip performance.

A total content of fillers based on 100 parts by mass of the rubber component in the rubber composition is preferably 100 parts by mass or more from the viewpoint of promoting heat generation of the tread rubber to further improve grip performance.

A content of a resin component based on 100 parts by mass of the rubber component in the rubber composition is preferably 30 parts by mass or more from the viewpoint of promoting heat generation of the tread rubber to further improve grip performance.

An acetone extraction amount of the rubber composition is preferably 28% by mass or more from the viewpoint of improving grip performance on an uneven road surface by increasing a ratio of a softening agent and the like in the rubber composition to make it easier for the tread rubber to follow the road surface.

An ash content of the rubber composition is preferably 15% by mass or more from the viewpoint of further improving grip performance by increasing a ratio of a filler and the like in the rubber composition to promote heat generation of the tread rubber.

In the tire relating to the present embodiment, the plurality of blocks include a plurality of shoulder blocks that form tread ends and a plurality of middle blocks that are adjacent to the shoulder blocks on an inner side in a tire axial direction, and it is preferable that, in a meridian cross section including a tire rotation axis, inner edges of the shoulder blocks protrude on an outer side in a tire radial direction with respect to virtual profiles in which profiles of tread surfaces of the middle blocks are extended to the shoulder blocks. This is because the inner edges of the shoulder blocks can thereby exert larger grip forces.

P×A×Hs is preferably greater than 800, where P represents a protruding amount, in mm, of the inner edge, A represents a length, in mm, of a tread surface of the shoulder block in a tire circumferential direction, and Hs represents a rubber hardness at 50°C of the rubber composition constituting the shoulder blocks.

When P×A×Hs is set within the above-described range, a shoulder block can be moderately deformed. Therefore, a large grounding pressure acts even on an outer edge of a middle block in a tire axial direction, which is considered to allow the middle block to exert a sufficient grip as well.

It is preferable that a pair of sipes extending without intersecting with each other are formed on a tread surface of any one of the plurality of blocks from the viewpoint of increasing a frictional force against the road surface.

The tire relating to the present embodiment is appropriately used as a tire for automated two-wheeled vehicle.

<Definitions>

A "tread part" is a part that forms a ground-contacting surface of a tire, and in a case where the tire comprises a member that forms a tire skeleton from steel or a textile material such as a belt layer, a belt reinforcing layer, a carcass layer, and the like, in a cross section in a tire radial direction, a member on an outer side therefrom in the tire radial direction.

A "standardized state" is a state where a tire is rim-assembled on a standardized rim and air under a standardized internal pressure is filled, and no load is applied. Unless otherwise specified, a tire in the standardized state is used.

A "dimension of each part of the tire" is a value specified in a standardized condition for one appearing on the outer surface of the tire, unless otherwise specified, while it is a value specified in a condition where, for example, the tire is cut on a plane including a tire rotation axis and the cut tire piece is held to a rim width of a standardized rim for one present inside the tire or on a tire cutting surface.

A "standardized rim" is a rim in a standard system including a standard on which the tire is based, defined by the standard for each tire. For example, the "standardized rim" refers to a standard rim of an applicable size described in "JATMA YEAR BOOK" in JATMA (The Japan Automobile Tyre Manufacturers Association, Inc.), "Measuring Rim" described in "STANDARDS MANUAL" in ETRTO (The European Tyre and Rim Technical Organisation), or "Design Rim" described in "YEAR BOOK" in TRA (The Tire and Rim Association, Inc.), to which references are made in this order, and if there is an applicable size at the time of the reference, the rim conforms to its standard. Besides, in a case of tires that are not defined by the standard, the standardized rim shall refer to one which can be assembled to the tire and whose width is narrowest among rims having the smallest diameter that can maintain an internal pressure (i.e., do not cause air leakage between the rim and the tire).

A "standardized internal pressure" is an air pressure in a standard system including a standard on which the tire is based, defined by the standard for each tire, for example, it refers to a "MAXIMUM AIR PRESSURE" in JATMA, "INFLATION PRESSURE" in ETRTO, or a maximum value described in Table "TIRE LOAD LIMITS AT VARIOUS COLD INFLATION PRESSURES" in TRA, to which references are made in this order as in the case of the standardized rim, and if there is an applicable size at the time of the reference, the standardized internal pressure conforms to its standard. Besides, in a case of tires that are not defined by the standard, the standardized internal pressure shall refer to a standardized internal pressure (250 KPa or more) of another tire size (specified in the standard) for which the standardized rim is described as a standard rim, and when a plurality of standardized internal pressures of 250 KPa or more are described, it shall refer to the minimum value among them.

A "standardized load in kg" is a load in a standard system including a standard on which the tire is based, defined by the standard for each tire, for example, a "MAXIMUM LOAD CAPACITY" in JATMA, a "LOAD CAPACITY" in ETRTO, or a maximum value described in Table "TIRE LOAD LIMITS AT VARIOUS COLD INFLATION PRESSURES" in TRA, to which references are made in this order as in cases of a standardized rim and a standardized internal pressure, and if there is an applicable size at the time of the reference, the load conforms to its standard. Then, in a case of tires that are not defined by the standard, the maximum load capacity $W_L$ calculated separately is defined as a standardized load.

The "maximum load capacity $W_L$ in kg" is calculated by the following equations. Wherein "V" is a virtual volume, in $mm^3$, of a tire, "Dt" is a tire outer diameter, in mm, in a standardized state, "Ht" is a tire cross-sectional height, in mm, in a tire radial direction on a cross section of the tire in a plane including a tire rotation axis, and "Wt" is a tire cross-sectional width, in mm, in a standardized state. When R represents a rim diameter of the tire, Ht can be calculated by (Dt-R)/2. Wt is a value obtained by excluding, if any, patterns or characters on the side surface of the tire. Besides, the "maximum load capacity" has the same meaning as the above-described standardized load.

$$W_L = 0.000011 \times V + 175$$

$$V = \{(Dt/2)^2 - (Dt/2 - Ht)^2\} \times \pi \times Wt$$

In the present invention, the term "block" refers to a region defined by a plurality of grooves formed in a tread part, or a region enclosed by a plurality of grooves formed in the tread part and a tread grounding end. Here, in the present invention, the term "groove" refers to a groove formed in the tread part and having an opening width of greater than 5.0 mm on the tread surface.

A "land ratio L, in %" is calculated by the following equation.

(Land ratio L)=[(surface area of block tread surface)/{(arc length of tread part in tire axial direction)×(circumferential length of tire center line)}]×100

A "circumferential length of a tire center line" is measured, for example, by placing a measure along the tire center line.

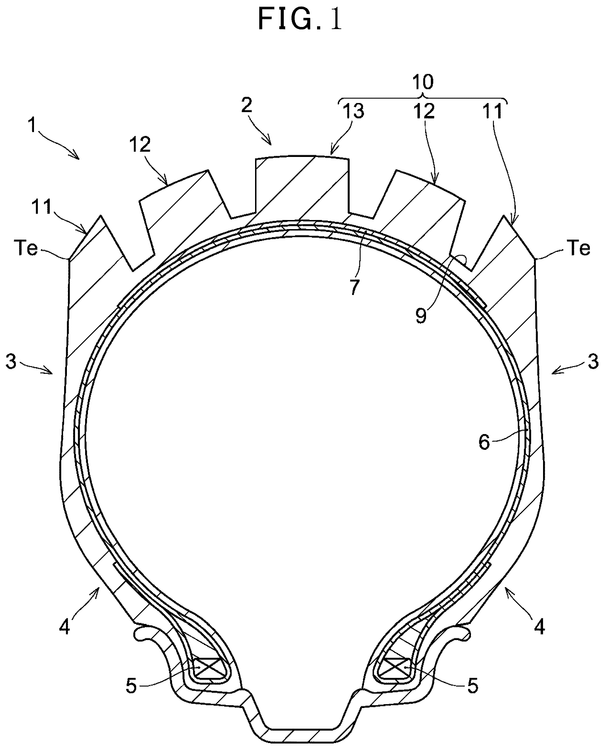

An "arc length of a tread part in a tire axial direction" is a length of an arc between a pair of tread grounding ends Te in FIG. 1. The arc length of the tread part in the tire axial direction can be calculated, for example, by rotating the tire by 72 degrees to measure arc lengths at five locations in total and averaging the respective arc lengths obtained.

When inner edges of shoulder blocks protrude on an outer side in a tire radial direction with respect to virtual profiles in which profiles of tread surfaces of middle blocks are extended to the shoulder blocks, the arc length of the tread part in the tire axial direction can be calculated, for example, as follows. First, a distance from an outer edge of a tread surface of one middle block in the tire axial direction to an outer edge of a tread surface of another middle block in the tire axial direction is measured. Next, a pair of virtual profiles are created by extending a profile of a tread surface of a middle block to a pair of tread grounding ends Te so as to have the same radius of curvature as that between outer edges of tread surfaces of middle blocks in the tire axial direction, and each of lengths of the virtual profiles is calculated. Then, an arc length of the tread part in the tire axial direction can be calculated by summing up a distance between the outer edges of the tread surfaces of the middle blocks and the length of the virtual profile.

In the present invention, a "sipe" refers to a recessed part formed on a tread surface of a block and extending toward an inner side in a tire radial direction, which has a width of less than 5.0 mm that is perpendicular to a longitudinal direction of a groove on the tread surface of the block. Besides, the above-described "surface area of block tread surface" shall not include sipes.

A "height H of a block" is calculated by, for each block, determining a depth of a groove in the deepest part among grooves that define the block and averaging the depths.

A "crown part" is a region that is 30% of a grounding surface width of a tread part with a tire equator centered.

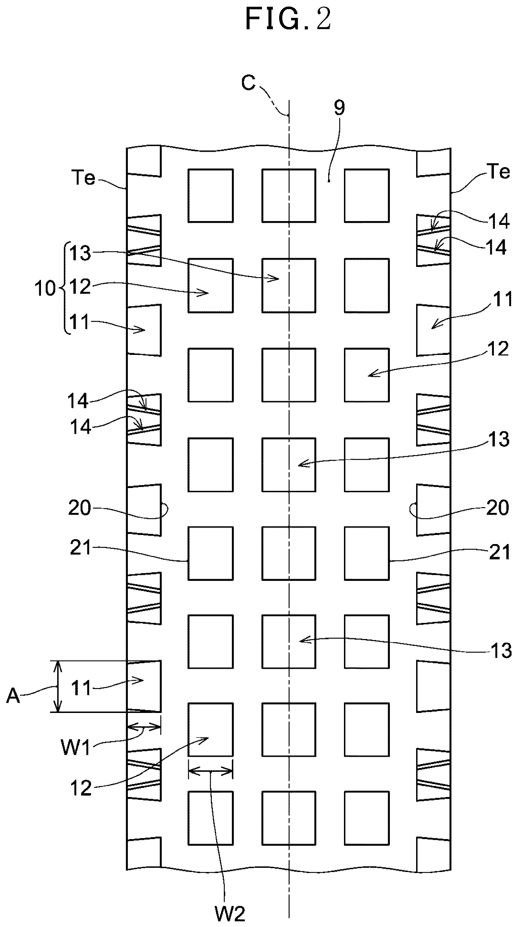

The "number of blocks present in the crown part" is a total number of blocks on a circumference of a tire, some or all of which are present in the crown part. In FIG. 2, not only the crown block 13 but also the middle block 12 can be blocks present in the crown part.

A "length L of a tread surface of a shoulder block in a tire circumferential direction" refers to the maximum length of the tread surface of the shoulder block in the tire circumferential direction.

A "rubber component of a rubber composition" is a component that contributes to crosslinking in the rubber composition and generally has a weight-average molecular weight (Mw) of 10,000 or more.

A "plasticizer" is a material that imparts plasticity to a rubber component, which is a component extracted from a rubber composition using acetone. Moreover, the plasticizer includes a plasticizer that is liquid (in a liquid state) at 25°C and a plasticizer that is solid at 25°C. However, it shall not comprise wax and stearic acid commonly used in the tire industry.

A "content of a plasticizer" also includes an amount of a plasticizer contained in an extended rubber component previously extended with the plasticizer such as oil, a resin component, a liquid rubber component, and the like. The same applies to a content of oil, a content of a resin component, and a content of a liquid rubber, for example, an extending oil is included in the content of oil when an extending component is oil.

<Measuring method>

"70°C tan $\delta$" is a loss tangent measured using a dynamic viscoelasticity measuring device (e.g., EPLEXOR series manufactured by gabo Systemtechnik GmbH), under a condition of a temperature at 70°C, a frequency of 10Hz, an initial strain of 10%, a dynamic strain of $\pm1\%$, and an extension mode. A sample for the measurement is a vulcanized rubber composition with 20 mm in length × 4 mm in width × 1 mm in thickness. When it is produced by cutting out a tire, it is cut out from a tread part so that a tire circumferential direction becomes a long side and a tire radial direction becomes a thickness direction.

"75°C $M_{300}$" is a modulus (tensile stress), in MPa as its unit, at 300% elongation in a grain direction (a rolling direction when forming a rubber sheet by extrusion or shearing treatment) measured under a condition of a tensile speed of 3.3 mm/sec in an atmosphere at 75°C according to JIS K 6251:2017. A sample for the measurement is a dumbbell-shaped No. 7 vulcanized rubber test piece with a thickness of 1 mm. When it is produced by being cut out from a tire, it is cut out from a tread part of the tire so that a tire circumferential direction becomes a tensile direction and a tire radial direction becomes a thickness direction.

A "rubber hardness Hs at 50°C" is a Shore hardness measured under a condition of a temperature at 50°C using a durometer type A in accordance with JIS K 6253-3:2012. Each test piece is prepared by being cut out from a shoulder block so that a tire radial direction becomes a thickness direction, and the measurement is performed by pressing a measuring instrument against the sample from the tire ground-contacting surface side of each test piece.

An "acetone extraction amount (AE)" is a value calculated by the following equation by immersing each vulcanized rubber test piece in acetone for 72 hours to extract a soluble component and measuring a mass of each test piece before and after extraction, in accordance with JIS K 6229.

Acetone extraction amount (% by mass) = {(mass of rubber test piece before extraction - mass of rubber test piece after extraction) / (mass of rubber test piece before extraction)} × 100

An "ash content" indicates a ratio of a total mass of components that do not combust (ash contents) in a rubber composition to a total mass of the rubber composition. The "ash content" can be calculated by the following equation after heating each test piece at 650°C for 4 hours under a nitrogen atmosphere in accordance with JIS K 6226-1:2003 and measuring masses of each test piece before and after heating.

(Ash content (% by mass))=(mass of test piece after heating/mass of test piece before heating)×100

A "glass transition temperature (Tg) of an SBR" is calculated in accordance with JIS K 6229:2015 after removing an extender oil with acetone and then subjecting a pure SBR content to differential scanning calorimetry (DSC) in accordance with JIS K 7121:2012.

A "styrene content" is calculated by pyrolysis gas chromatography or NMR measurement ($^1$H-NMR or $^{13}$C-NMR). Unlike physical property values such as a complex elastic modulus (E*) and the like, an amount of a component such as the "styrene content" and the like has a true value that is independent of a measuring method, so it is preferable to use a measuring method with as high accuracy as possible. Besides, in the present specification, "pyrolysis gas chromatography" refers to a method of heating a sample in a pyrolyzer, separating individual components contained in gas phase generated by this heating using a separation column, and analyzing each separated component. The styrene content is applied to, for example, a rubber component having a repeating unit derived from styrene such as an SBR and the like (styrene unit).

A "vinyl content (1,2-bond butadiene unit amount)" is calculated by pyrolysis gas chromatography or NMR measurement ($^1$H-NMR or $^{13}$C-NMR). Similarly with the "styrene content", the "vinyl content" has a true value that is independent of a measuring method, so it is preferable to use a measuring method with as high accuracy as possible. The vinyl content is applied to, for example, a rubber component having a repeating unit derived from butadiene such as an SBR, a BR, and the like.

A "cis content (cis-1,4-bond butadiene unit amount)" is a value measured by infrared absorption spectrometry or NMR measurement ($^1$H-NMR or $^{13}$C-NMR) according to JIS K 6239-2:2017 and is applied to, for example, a rubber component having a repeating unit derived from butadiene such as a BR and the like. Similarly with the "styrene content", the "cis content" has a true value that is independent of a measuring method, so it is preferable to use a measuring method with as high accuracy as possible. The cis content is applied to, for example, a rubber component having a repeating unit derived from butadiene such as an SBR, a BR, and the like.

A "total styrene amount in a rubber component" is a total content, in % by mass, of styrene units contained in 100 % by mass of a rubber component, which is a value obtained by multiplying a styrene content, in % by mass, by a mass fraction in a rubber component to obtain a calculated value, for each of respective rubber components, and summing these values. Specifically, it is calculated by Σ(styrene content (% by mass) of each styrene unit-containing rubber × content (% by mass) of each styrene unit-containing rubber in rubber component / 100). For example, when the rubber component consists of 20% by mass of a first SBR (styrene content: 25% by mass), 30% by mass of a second SBR (styrene content: 27.5% by mass), and 50% by mass of a BR, a total styrene amount in the rubber component is about 13.3% by mass (= (25×20/100)+(27.5×30/100)+(0×10/100)).

A "weight-average molecular weight (Mw)" can be calculated in terms of a standard polystyrene based on measurement values obtained by a gel permeation chromatography (GPC) (e.g., GPC-8000 Series manufactured by Tosoh Corporation, detector: differential refractometer, column: TSKgel (Registered Trademark) SuperMultiporeHZ-M manufactured by Tosoh Corporation). For example, it is applied to an SBR, a BR, a plasticizer, and the like.

A "nitrogen adsorption specific surface area ($N_2$SA) of carbon black" is measured according to JIS K 6217-2:2017.

A "nitrogen adsorption specific surface area ($N_2$SA) of silica" is measured by the BET method according to ASTM D3037-93.

An "average primary particle size" is a value obtained by photographing particles using a transmission or scanning electron microscope and calculating an arithmetic average of particle sizes of 400 particles. If a shape of the particle is spherical, a diameter of the sphere is defined as a particle size, and if the shape is other than spherical, a circle equivalent diameter (positive square root of {4 × (area of particle)/π}) is calculated from the microscope image to be defined as a particle size. The average primary particle size is applied to silica, carbon black, etc.

A "softening point of a resin component" is a temperature at which a sphere drops when the softening point specified in JIS K 6220-1:2015 7.7 is measured with a ring and ball softening point measuring device.

A procedure for producing a tire that is one embodiment of the present invention will be described in detail below. However, the following descriptions are illustrative for explaining the present invention, and are not intended to limit the technical scope of the present invention to this description range only.

[Tire]

The tire relating to the present embodiment comprises a tread part consisting of a rubber composition described below, the tread part being provided with a plurality of blocks. The tire of one embodiment of the present invention will be described below with reference to the drawings, but the drawings are merely illustrative. Moreover, the embodiment shown below is merely an example.

FIG. 1 is a tire meridian cross-sectional view including a tire rotation axis of a tire 1 relating to the present embodiment. As shown in FIG. 1, the tire 1 comprises a tread part 2, a sidewall part 3, a bead part 4, a carcass layer 6, and a belt layer 7. The bead part 4 comprises a bead core 5. The tread part 2 may be a tread part consisting of a single rubber layer, or may be a tread part having a cap rubber layer constituting a tread surface and one or more rubber layers present between the cap rubber layer and the belt layer 7.

An outer surface of the tread part 2 between two tread grounding ends Te is curved in an arc shape that is convex on an outer side in a tire radial direction, and is provided with a plurality of blocks 10 that protrude from a groove bottom surface 9.

The height H of the block is preferably 5 mm or more, more preferably 8 mm or more, further preferably 11 mm or more, particularly preferably 14 mm or more. Moreover, the height H of the block is preferably 50 mm or less, more preferably 45 mm or less, further preferably 40 mm or less.

FIG. 2 is a developed view of the tread part 2. As shown in FIG. 2, the block 10 include, for example, a shoulder block 11, a middle block 12, and a crown block 13, but it is not limited to such aspects. The crown block 13 is disposed in the crown part. The shoulder block 11 forms a tread grounding end Te. The middle block 12 is adjacent to the shoulder block 11 on an inner side in a tire axial direction.

A shape of a tread surface of a block is not limited to a square shape as shown in FIG. 2, and may be a polygonal shape other than the square shape. Moreover, the shape of the tread surface of the block may include a curve.

The number of blocks present in the crown part is preferably 15 or more, more preferably 20 or more, further preferably 25 or more, particularly preferably 28 or more. On the other hand, the number of blocks present in the crown part is preferably 50 or less, more preferably 45 or less, further preferably 40 or less, particularly preferably 35 or less.

A length A of a tread surface of the shoulder block 11 in a tire circumferential direction is preferably 8.0 mm or more, more preferably 10 mm or more, further preferably 12 mm or more, particularly preferably 14 mm or more. Moreover, A is preferably 20 mm or less, more preferably 18 mm or less.

A land ratio L of the tread part 2 is less than 30%, preferably less than 28%, more preferably less than 26%, further preferably less than 24%, particularly preferably less than 22%. Moreover, the land ratio L is preferably greater than 10%, more preferably greater than 12%, further preferably greater than 14%, particularly preferably greater than 16%.

It is preferable that a pair of sipes extending without intersecting with each other are formed on a tread surface of any one of a plurality of blocks from the viewpoint of increasing a frictional force against the road surface. In FIG. 2, a pair of sipes extending without intersecting with each other are formed on the tread surface of the shoulder block 11. Although a sipe 14 extends linearly, it is not limited to such an aspect, and may extend in, for example, a sinusoidal shape, a zigzag shape, or the like.

In FIG. 2, a length of the shoulder block 11 in a tire circumferential direction gradually increases toward an inner side in a tire axial direction. As a result, the shoulder block 11 has a trapezoidal tread surface.

A width W1 of a tread surface of the shoulder block 11 in a tire axial direction is preferably smaller than a width W2 of a tread surface of the middle block 12 in a tire axial direction. By making W2>W1, the shoulder block 11 becomes easy to be moderately deformed, and it is considered that a grounding pressure acting on the middle blocks 12 can be increased.

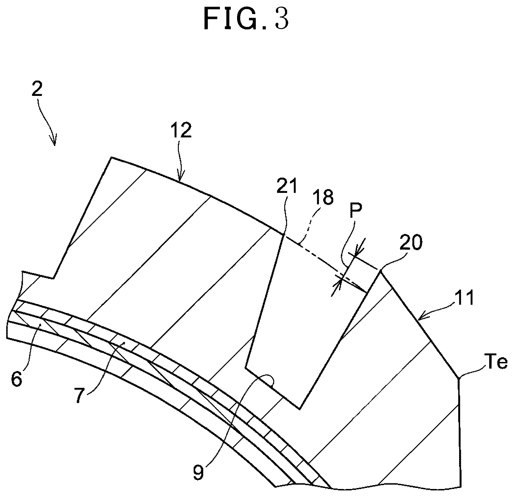

FIG. 3 is an enlarged cross-sectional view of the middle block 12 and the shoulder block 11. In FIG. 3, a profile of a tread surface of the middle block 12 is an arc shape that is convex on an outer side in a tire radial direction. An inner edge 20 of the tread surface of the shoulder block 11 in the tire axial direction protrudes on the outer side in the tire radial direction with respect to a virtual profile 18 in which a profile of a tread surface of the middle block 12 is extended to the shoulder block 11. It is considered that the inner edge 20 of the shoulder block 11 can thereby exert a larger grip force.

A protruding amount P of the inner edge 20 from the virtual profile 18 is preferably 0.5 mm or more, more preferably 1.0 mm or more, further preferably 1.5 mm or more. On the other hand, P is preferably 5.0 mm or less, more preferably 4.5 mm or less, further preferably 4.0 mm or less, particularly preferably 3.5 mm or less.

A rubber hardness Hs at 50°C of the rubber composition constituting the shoulder block 11 is preferably 45 or more, more preferably 48 or more, further preferably 50 or more, particularly preferably 53 or more. On the other hand, Hs is preferably 80 or less, more preferably 75 or less, further preferably 70 or less, particularly preferably 65 or less. Besides, the rubber hardness Hs can be appropriately adjusted depending on types or contents of a rubber component, a filler, a plasticizer, a vulcanizing agent, a vulcanization accelerator, and the like, which will be described below. For example, it tends to be increased by increasing a content of a filler.

A product of P, A, and Hs (P×A×Hs) is preferably greater than 600, more preferably greater than 700, further preferably greater than 800, further preferably greater than 850, further preferably greater than 900, particularly preferably greater than 950. When P×A×Hs is set within the above-described ranges, the shoulder block 11 can be moderately deformed. Therefore, a large grounding pressure acts even on an outer edge 21 of a tread surface of the middle block 12 in a tire axial direction, which is considered to allow the middle block 12 to exert a sufficient grip as well. On the other hand, an upper limit value of P×A×Hs is not particularly limited, but it is preferably less than 5000, more preferably less than 4000, further preferably less than 3000, further preferably less than 2000, particularly preferably less than 1500.

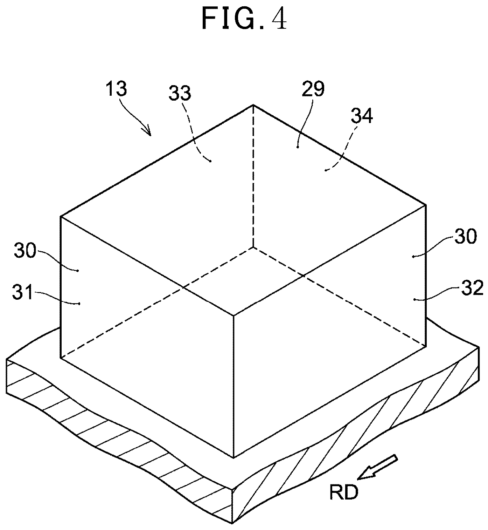

FIG. 4 is a perspective view of the crown block 13 as an example illustrating a configuration of the block 10. The crown block 13 comprises a tread surface 29 and a side surface 30. The side surface 30 includes, for example, a first side surface 31 disposed on the leading side of the tread surface 29 in a tire rotation direction RD, a second side surface 32 disposed on one side of the tread surface 29 in a tire axial direction, a third side surface 33 disposed on the other side of the tread surface 29 in the tire axial direction, and a fourth side surface 34 disposed on the trailing side of the tread surface 29 in the tire rotation direction RD. Besides, a similar configuration may be adopted for the middle block 12.

The acetone extraction amount of the rubber composition constituting the tread part is preferably 20% by mass or more, more preferably 22% by mass or more, further preferably 24% by mass or more, further preferably 26% by mass or more, particularly preferably 28% by mass or more. On the other hand, the acetone extraction amount is preferably 45% by mass or less, more preferably 42% by mass or less, further preferably 39% by mass or less, particularly preferably 37% by mass or less. Besides, when the tread part 2 consists of two or more layers, the "rubber composition constituting the tread part" shall refer to a rubber composition constituting the cap rubber layer (the same applies hereinafter).

The ash content of the rubber composition constituting the tread part is preferably 0.5% by mass or more, more preferably 1.0% by mass or more, further preferably 1.5% by mass or more, further preferably 5.0% by mass or more, further preferably 10% by mass or more, particularly preferably 15% by mass or more. On the other hand, the ash content is preferably 35% by mass or less, more preferably 30% by mass or less, further preferably 25% by mass or less.

70°C tan $\delta$ of the rubber composition constituting the tread part is preferably 0.20 or more, more preferably 0.25 or more, further preferably 0.30 or more, particularly preferably 0.33 or more, from the viewpoint of grip performance. On the other hand, it is preferably 0.60 or less, more preferably 0.55 or less, further preferably 0.50 or less, particularly preferably 0.45 or less, from the viewpoint of durability.

In the present embodiment, 70°C tan $\delta$ is an index relating to heat generation of a rubber composition. 70°C tan $\delta$ can be appropriately adjusted depending on types or contents of a rubber component, a filler, a plasticizer, a vulcanizing agent, a vulcanization accelerator, and the like, which will be described below. For example, it tends to be increased by increasing a content of a filler (carbon black, silica, etc.) or a plasticizer.

75°C $M_{300}$ of the rubber composition constituting the tread part is 5.0 MPa or more, preferably 5.5 MPa or more, more preferably 6.0 MPa or more, further preferably 6.5 MPa or more, further preferably 7.0 MPa or more, further preferably 7.5 MPa or more, particularly preferably 8.0 MPa or more, from the viewpoint of securing anchor friction. On the other hand, 75°C $M_{300}$ is preferably 16.0 MPa or less, more preferably 15.0 MPa or less, further preferably 14.0 MPa or less, particularly preferably 13.0 MPa or less, from the viewpoint of securing anchor friction.

Besides, 75°C $M_{300}$ and 100°C $M_{300}$ can be appropriately adjusted depending on types or contents of a rubber component, a filler, a plasticizer, a vulcanizing agent, a vulcanization accelerator, and the like, which will be described below. For example, it tends to be increased by increasing a content of a filler or a vulcanizing agent.

In the tire relating to the present embodiment, L, 70°C tan $\delta$, and 75°C $M_{300}$* satisfy the following inequality (1):

$$(L^{0.5} \times 70°C \text{ tan } \delta)/75°C \text{ } M_{300} \geq 0.13 \text{ (1).}$$

In the present embodiment, the value of $(L^{0.5} \times 70°C$ tan $\delta)/75°C$ $M_{300}$ is preferably 0.14 or more, more preferably 0.15 or more. On the other hand, an upper limit value of the value of $(L^{0.5} \times 70°C$ tan $\delta)/75°C$ $M_{300}$ is not particularly limited, but it is preferably 1.50 or less, more preferably 1.20 or less, further preferably 1.00 or less, further preferably 0.80 or less, further preferably 0.60 or less, particularly preferably 0.40 or less.

H/70°C tan $\delta$ is preferably less than 105, more preferably less than 95, further preferably less than 85, further preferably less than 75, further preferably less than 70, particularly preferably less than 65, from the viewpoint of the effects of the present invention. On the other hand, a lower limit value of H/70°C tan $\delta$ is not particularly limited, but it is preferably greater than 10, more preferably greater than 15, further preferably greater than 20, further preferably greater than 25, further preferably greater than 30, particularly preferably greater than 35.

[Rubber composition]

The rubber composition constituting the tread part relating to the present embodiment (hereinafter referred to as the rubber composition relating to the present embodiment) comprises a rubber component and can be produced using raw materials described below in accordance with required 70°C tan $\delta$, 75°C $M_{300}$, etc. The rubber composition relating to the present embodiment will be described below.

<Rubber component>

The rubber component relating to the present embodiment preferably comprises a diene-based rubber such as a styrene-butadiene rubber (SBR) and the like, and may further comprise a diene-based rubber other than the SBR such as a butadiene rubber (BR) and the like. Moreover, the rubber component may be one consisting of an SBR.

Examples of diene-based rubbers other than an SBR include, for example, an isoprene-based rubber, a butadiene rubber (BR), a styrene-isoprene rubber (SIR), a styrene-isoprene-butadiene rubber (SIBR), a chloroprene rubber (CR), an acrylonitrile-butadiene rubber (NBR), and the like. Moreover, these diene-based rubbers may be modified rubbers treated with modifying groups capable of interacting with fillers such as carbon black, silica, and the like, or may be hydrogenated rubbers obtained by hydrogenating a part of an unsaturated bond. The diene-based rubber may be used alone, or two or more thereof may be used in combination. Moreover, as the diene-based rubber, an extended rubber which has been previously extended with a plasticizer which will be mentioned later may be used.

A content of a diene-based rubber in the rubber component is preferably 70% by mass or more, more preferably 80% by mass or more, further preferably 90% by mass or more, particularly preferably 95% by mass or more. Moreover, the rubber component may be one consisting of a diene-based rubber.

(SBR)

The SBR is not particularly limited, examples of which include, for example, an unmodified solution-polymerized SBR (S-SBR) and an emulsion-polymerized SBR (E-SBR), modified SBRs (a modified S-SBR, a modified E-SBR) thereof, and the like. Examples of the modified SBR include an SBR modified at its terminal and/or main chain, a modified SBR coupled with tin, a silicon compound, etc. (a modified SBR of condensate or having a branched structure, etc.), and the like. Furthermore, hydrogenated ones of these SBRs (hydrogenated SBRs) and the like can also be used. These SBRs may be used alone, or two or more thereof may be used in combination.

As an SBR, an oil-extended SBR can be used, or a non-oil-extended SBR can be used. An extending oil amount of an SBR, i.e., a content of an extending oil contained in the SBR when used is preferably 10 to 50 parts by mass based on 100 parts by mass of a rubber solid content of the SBR.

Example of SBRs that can be used in the present embodiment include, for example, those commercially available from JSR Corporation, Sumitomo Chemical Co., Ltd., UBE Corporation, Asahi Kasei Corporation, ZS Elastomer Co., Ltd., ARLANXEO, etc.

A styrene content of an SBR is preferably 20% by mass or more, more preferably 25% by mass or more, further preferably 30% by mass or more, further preferably 35% by mass or more, particularly preferably 39% by mass or more, from the viewpoint of the effects of the present invention. On the other hand, the styrene content of the SBR is preferably 60% by mass or less, more preferably 55% by mass or less, further preferably 50% by mass or less. Besides, the styrene content of the SBR is measured by the above-described measuring method.

A vinyl content of an SBR is preferably 10 mol% or more, more preferably 20 mol% or more, further preferably 30 mol% or more, from the viewpoint of the effects of the present invention. Moreover, the vinyl content of the SBR is preferably 80 mol% or less, more preferably 70 mol% or less, further preferably 60 mol% or less. Besides, the vinyl content of the SBR is measured by the above-described measuring method.

A glass transition point (Tg) of an SBR is preferably -50°C or higher, more preferably -40°C or higher, further preferably -30°C or higher, from the viewpoint of the effects of the present invention. Moreover, the Tg of the SBR is preferably 10°C or lower, more preferably 0°C or lower, further preferably - 10°C or lower. Besides, the Tg of the SBR is measured by the above-described measuring method.

A weight-average molecular weight (Mw) of an SBR is preferably 200,000 or more, more preferably 250,000 or more, further preferably 300,000 or more, from the viewpoint of grip performance. Moreover, the Mw of the SBR is preferably 2,000,000 or less, more preferably 1,800,000 or less, further preferably 1,500,000 or less, from the viewpoint of cross-linking uniformity. Besides, the Mw of the SBR is measured by the above-described measuring method.

A content of an SBR in the rubber component is preferably greater than 40% by mass, more preferably greater than 50% by mass, further preferably greater than 60% by mass, further preferably greater than 70% by mass, particularly preferably greater than 80% by mass, from the viewpoint of the effects of the present invention. On the other hand, an upper limit value of the content is not particularly limited.

(BR)

A BR is not particularly limited, and those common in the tire industry can be used such as, for example, a BR having a cis content of less than 50 mol% (a low cis BR), a BR having a cis content of 90 mol% or more (a high cis BR), a rare-earth-based butadiene rubber synthesized using a rare-earth element-based catalyst (a rare-earth-based BR), a BR containing a syndiotactic polybutadiene crystal (an SPB-containing BR), a modified BR (a high cis modified BR, a low cis modified BR), and the like. These BRs may be used alone, or two or more thereof may be used in combination.

As the high cis BR, for example, those commercially available from Zeon Corporation, UBE Corporation, JSR Corporation, etc. can be used. When the high cis BR is compounded, low temperature characteristics and abrasion resistance can be improved. A cis content of the high-cis BR is preferably greater than 95 mol%, more preferably greater than 96 mol%, further preferably greater than 97 mol%. Besides, the cis content of the BR is measured by the above-described measuring method.

A weight-average molecular weight (Mw) of a BR is preferably 300,000 or more, more preferably 350,000 or more, further preferably 400,000 or more, from the viewpoint of abrasion resistance. Moreover, it is preferably 2,000,000 or less, more preferably 1,000,000 or less, from the viewpoint of cross-linking uniformity. Besides, the Mw of the BR is measured by the above-described measuring method.

A content of a BR in the rubber component is preferably less than 50% by mass, more preferably less than 40% by mass, further preferably less than 30% by mass, further preferably less than 20% by mass, further preferably less than 10% by mass, and the rubber component may be one comprising no BR, from the viewpoint of the effects of the present invention.

(Isoprene-based rubber)

As an isoprene-based rubber, for example, those common in the tire industry can be used, such as an isoprene rubber (IR), a natural rubber, and the like. Examples of the natural rubber include a non-modified natural rubber (NR), as well as a modified natural rubber such as an epoxidized natural rubber (ENR), a hydrogenated natural rubber (HNR), a deproteinized natural rubber (DPNR), an ultra pure natural rubber, a grafted natural rubber, and the like. These isoprene-based rubbers may be used alone, or two or more thereof may be used in combination.

An NR is not particularly limited, and those common in the tire industry can be used, examples of which include, for example, SIR20, RSS#3, TSR20, and the like.

A content of an isoprene-based rubber in the rubber component is preferably less than 50% by mass, more preferably less than 40% by mass, further preferably less than 30% by mass, further preferably less than 20% by mass, further preferably less than 10% by mass, and the rubber component may be one comprising no isoprene-based rubber, from the viewpoint of the effects of the present invention.

A total styrene amount in the rubber component is preferably 20% by mass or more, more preferably 25% by mass or more, further preferably 30% by mass or more, further preferably 35% by mass or more, particularly preferably 39% by mass or more, from the viewpoint of heat generation. Moreover, the total styrene amount in the rubber component is preferably 55% by mass or less, more preferably 52% by mass or less, further preferably 48% by mass or less.

(Other rubber components)

The rubber component may comprise rubber components other than diene-based rubbers as long as they do not affect the effects of the present invention. As other rubber components other than diene-based rubbers, crosslinkable rubber components commonly used in the tire industry can be used, examples of which include, for example, non-diene-based rubbers such as a butyl rubber (IIR), a halogenated butyl rubber, an ethylene-propylene rubber, a polynorbornene rubber, a silicone rubber, a polyethylene chloride rubber, a fluorine rubber (FKM), an acrylic rubber (ACM), a hydrin rubber, and the like. Moreover, besides the above-described rubber components, the rubber component may or may not comprise a known thermoplastic elastomer. Other rubber components may be used alone, or two or more thereof may be used in combination.

(Rubber component synthesized from recycle-derived/biomass-derived raw material)

A monomer that is a structural unit of a synthetic rubber such as an SBR, a BR, and the like may be one derived from underground resources such as petroleum, a natural gas, and the like, or a recycled one from a rubber product such as a tire and the like or a non-rubber product such as polystyrene and the like. A monomer obtained by recycling (a recycled monomer) is not particularly limited, examples of which include a recycle-derived polyisoprene, a recycle-derived butadiene, a recycle-derived aromatic vinyl compound, and the like. Examples of the butadiene include 1,2-butadiene, 1,3-butadiene, and the like. The above-described aromatic vinyl compound is not particularly limited, examples of which include styrene and the like. Among them, a recycle-derived polyisoprene (a recycled polyisoprene) a recycle-derived butadiene (a recycled butadiene) and/or a recycle-derived styrene (a recycled styrene) are preferably used as a raw material.

A method of producing a recycled monomer is not particularly limited, examples of which include, for example, a method of synthesizing a monomer from a recycle-derived naphtha obtained by decomposing a rubber product such as a tire and the like. Moreover, a method of producing a recycle-derived naphtha is not particularly limited, and a recycle-derived naphtha may be obtained from, for example, a rubber product such as a tire and the like by decomposing it under high temperature and pressure, by decomposing it by microwaves, or by mechanically pulverizing it and then extracting therefrom.

Furthermore, a monomer that is a structural unit of a polymer such as an IR, an SBR, a BR, and the like may be a biomass-derived one. In the present specification, biomass refers to a material derived from natural sources such as plants and the like. Biomass is not particularly limited, examples of which include, for example, agricultural, forestry and fishery products, sugar, wood waste, a plant residue after acquisition of a useful component, a plant-derived ethanol, a biomass naphtha, and the like.

The biomass-derived monomer (biomass monomer) is not particularly limited, examples of which include a biomass-derived butadiene, a biomass-derived aromatic vinyl compound, and the like. Examples of the butadiene include 1,2-butadiene, 1,3-butadiene, and the like. The above-described aromatic vinyl compound is not particularly limited, examples of which include styrene and the like. Moreover, a method of producing a biomass monomer is not particularly limited, examples of which include, for example, one by a biological and/or a chemical and/or a physical conversion of animals and plants, and the like. A microbial fermentation is representative of biological conversion, and examples of chemical and/or physical conversion include one due to a catalyst, one due to a high heat, one due to a high pressure, one due to an electromagnetic wave, one due to a critical fluid, and combinations thereof.

A polymer synthesized from a biomass monomer component (biomass polymer) is not particularly limited, examples of which include a butadiene rubber synthesized from a biomass-derived butadiene, an aromatic vinyl/butadiene copolymer synthesized from a biomass-derived butadiene and/or a biomass-derived aromatic vinyl compound, and the like. Examples of the aromatic vinyl/butadiene copolymer include, for example, a styrene-butadiene rubber synthesized from a biomass-derived butadiene and/or a biomass-derived styrene, and the like.

Whether a raw material of a polymer is derived from biomass can be determined by pMC (percent Modern Carbon) measured according to ASTM D6866-10. pMC is a ratio of $^{14}C$ concentration of a sample to $^{14}C$ concentration of a modern standard carbon (modern standard reference) and a value used as an index indicating a biomass ratio of a compound. A significance of this value is mentioned below.

In 1 mole of carbon atoms ($6.02 \times 10^{23}$ pieces), there are about $6.02 \times 10^{11}$ $^{14}C$ that are about one trillionth of the number of normal carbon atoms. A half-life of $^{14}C$ is 5730 years, and $^{14}C$ regularly decreases. Thus, in fossil fuels such as coal, petroleum, a natural gas, and the like, where it is considered that 226,000 years or more have passed since carbon dioxide in the atmosphere was absorbed by plants to be fixed, all of $^{14}C$ elements, which were contained in them at the beginning of fixation, decay. Therefore, in the present 21st century, fossil fuels such as coal, petroleum, a natural gas, and the like do not contain any $^{14}C$ element. Therefore, chemical substances produced using these fossil fuels as raw materials do not contain any $^{14}C$ element as well.

On the other hand, $^{14}C$ is constantly generated by cosmic rays causing nuclear reactions in the atmosphere. Thus, decrease in $^{14}C$ due to radioactive decay and generation of $^{14}C$ due to nuclear reactions are balanced, and the amount of $^{14}C$ has been constant in the Earth's atmospheric environment. Therefore, the $^{14}C$ concentration of substances derived from biomass resources that have been circulating in the current environment becomes a value of about $1 \times 10^{-12}$ mol% based on total C atoms, as described above. Accordingly, by utilizing a difference between these values, a biomass ratio in a certain compound can be calculated.

This $^{14}C$ is generally measured as follows. A $^{13}C$ concentration ($^{13}C/^{12}C$) and a $^{14}C$ concentration ($^{14}C/^{12}C$) are measured using an accelerator mass spectrometry based on a tandem accelerator. In the measurements, a $^{14}C$ concentration in a circulating carbon in nature as of 1950 is adopted as the modern standard reference for the $^{14}C$ concentration. As a specific reference material, an oxalic acid standard provided by NIST (National Institute of Standards and Technology) is used. A specific radioactivity of carbon in this oxalic acid (radioactivity intensity of $^{14}C$ per gram of carbon) is sorted for each carbon isotope, $^{13}C$ is corrected to a constant value, and a value corrected for attenuation from 1950 to the date of measurement is used as a standard $^{14}C$ concentration value (100%). A ratio of this value to a value actually measured for a sample becomes a pMC value.

Thus, if a rubber is produced from a material derived from 100% biomass, the $^{14}C$ concentration shows a value of approximately 110 pMC, often not being equal to 100 under a normal condition currently, though there are regional differences and the like. On the other hand, if this $^{14}C$ concentration is measured for a chemical substance derived from a fossil fuel such as petroleum and the like, it shows a value of approximately 0 pMC (for example, 0.3 pMC). This value corresponds to a biomass ratio of 0% as mentioned above.

From above, it is appropriate in terms of environmental protection to use a material such as a rubber having a high pMC value, and the like, that is, a material such as a rubber having a high biomass ratio, and the like, for a rubber composition.

<Filler>

The rubber composition relating to the present embodiment preferably comprises a filler. The rubber composition preferably comprises carbon black as a filler, and more preferably comprises carbon black and silica. Moreover, the filler may be a filler consisting only of carbon black or a filler consisting only of carbon black and silica.

(Carbon black)

Examples of carbon black include, but not particularly limited to, N134, N110, N220, N234, N219, N339, N330, N326, N351, N550, N762, and the like. A raw material of carbon black may be a biomass material such as lignin, a vegetable oil, and the like, or may be a pyrolysis oil obtained by pyrolyzing a waste tire. Moreover, a method of producing carbon black may be one by combustion such as a furnace method and the like, one by hydrothermal carbonization (HTC), or one by pyrolysis of methane such as a thermal black method and the like. As commercially available products, products from, Asahi Carbon Co., Ltd., Cabot Japan K.K., Tokai Carbon Co., Ltd., Mitsubishi Chemical Corporation, Lion Corporation, NIPPON STEEL Chemical & Material Co., Ltd., Columbia Chemical Corporation, etc. can be used. Carbon black may be used alone, or two or more thereof may be used in combination.

Moreover, besides the above-described carbon black, from the viewpoint of life cycle assessment, carbon black made from a biomass material such as lignin and the like or a recovered carbon black obtained by pyrolyzing and refining a product including carbon black such as a tire and the like may be used as carbon black.

In the present specification, a "recovered carbon black" refers to a carbon black obtained by pulverizing a product such as a used tire comprising carbon black and the like and baking the pulverized product, in which, when the product is subjected to oxidative combustion by heating in the air, using a thermal weight measurement method according to JIS K 6226-2:2003, a ratio of a mass of ash (ash content), which is a component that does not combust, is 13% by mass or more. That is, a ratio of a mass (carbon amount) of a weight loss content due to the oxidative combustion of the recovered carbon black is 87% by mass or less. The recovered carbon black may be expressed by rCB.

The recovered carbon black can be obtained from a pyrolysis process of a used pneumatic tire. For example, EP 3427975 A describes, with reference to "Rubber Chemistry and Technology", Vol. 85, No. 3, Pages 408 to 449 (2012), in particular, Pages 438, 440, and 442, that the recovered carbon black can be obtained by pyrolysis at 550 to 800°C excluding oxygen or vacuum pyrolysis at a relatively low temperature, of an organic material ([0027]). Such carbon black obtained from the pyrolysis process usually lacks a functional group on its surface, as mentioned in [0004] of JP 6856781 B (A comparison of surface morphology and chemistry of pyrolytic carbon blacks with commercial carbon blacks, Powder Technology 160 (2005) 190-193).

The recovered carbon black may lack a functional group on its surface or may be treated so that its surface comprises a functional group. The treatment performed so that the surface of the recovered carbon black comprises a functional group can be implemented by a conventional method. For example, in EP3173251 A, carbon black comprising a hydroxyl and/or carboxyl group on its surface is obtained by treating carbon black obtained from a pyrolysis process with potassium permanganate under an acidic condition. Moreover, in JP 6856781 B, carbon black whose surface is activated is obtained by treating carbon black obtained from a pyrolysis process with an amino acid compound comprising at least one thiol group or disulfide group. The recovered carbon black relating to the present embodiment also comprises carbon black whose surface has been treated so as to comprise a functional group.

As the recovered carbon black, those commercially available from Strebl Green Carbon Pte Ltd., LD Carbon, etc. can be used.

A nitrogen adsorption specific surface area ($N_2SA$) of carbon black is preferably 50 $m^2/g$ or more, more preferably 80 $m^2/g$ or more, further preferably 100 $m^2/g$ or more, particularly preferably greater than 110 $m^2/g$, from the viewpoint of reinforcing property. Moreover, it is preferably 250 $m^2/g$ or less, more preferably 220 $m^2/g$ or less, further preferably 190 $m^2/g$ or less, from the viewpoints of heat generation and processability. Besides, the $N_2SA$ of carbon black is measured by the above-described measuring method.

An average primary particle size of carbon black is preferably 36 nm or less, more preferably 32 nm or less, further preferably 28 nm or less, particularly preferably 24 nm or less. A lower limit of the average primary particle size is, but not particularly limited to, preferably 5 nm or more, more preferably 8 nm or more, further preferably 10 nm or more.

A content of carbon black based on 100 parts by mass of the rubber component is preferably 10 parts by mass or more, more preferably 20 parts by mass or more, further preferably 30 parts by mass or more, further preferably 40 parts by mass or more, particularly preferably 50 parts by mass or more, from the viewpoint of the effects of the present invention. Moreover, the content is preferably 150 parts by mass or less, more preferably 140 parts by mass or less, further preferably 130 parts by mass or less, particularly preferably 120 parts by mass or less.

(Silica)

Silica is not particularly limited, and those common in the tire industry can be used, such as, for example, silica prepared by a dry process (anhydrous silica), silica prepared by a wet process (hydrous silica), and the like. A raw material of silica is not particularly limited, and may be, for example, mineral-derived raw materials such as quartz and the like, bio-derived raw materials such as rice husks and the like (e.g., silica made from a biomass material such as rice husks and the like), or silica recycled from a product containing silica. Among them, hydrous silica prepared by a wet process is preferable from the reason that it has many silanol groups. Silica may be used alone, or two or more thereof may be used in combination.

Silica made from a biomass material can be obtained by, for example, burning rice husks to obtain rice husk ashes, extracting silicate from the rice husk ashes using a sodium hydroxide solution, generating silicon dioxide by reacting the silicate with sulfuric acid in the same manner as for a conventional wet silica, and filtering, washing with water, drying and pulverizing precipitates of the silicon dioxide.

As silica recycled from a product containing silica, for example, silica recovered from an electronic component such as a semiconductor and the like, a tire, a product containing silica such as a desiccant, a filtering material such as diatomaceous earth and the like, etc. can be used. Moreover, a recovering method is not particularly limited, examples of which include pyrolysis, decomposition by electromagnetic waves, and the like. Among them, silica recovered from an electronic component such as a semiconductor and the like or from a tire is preferable.

When silica crystallizes, it is insoluble in water, and silicic acid that is a component thereof cannot be used. By controlling a burning temperature and a burning time, crystallization of silica in rice husk ashes can be suppressed (JP 2009-2594 A, Akita Prefectural University Web Journal B/2019, vol.6, p.216-222, etc.). As an amorphous silica extracted from rice husks, those commercially available from Wilmar, etc. can be used.

A nitrogen adsorption specific surface area ($N_2SA$) of silica is preferably 110 $m^2/g$ or more, more preferably 130 $m^2/g$ or more, further preferably 150 $m^2/g$ or more, particularly preferably 170 $m^2/g$ or more, from the viewpoints of fuel efficiency and abrasion resistance. Moreover, it is preferably 350 $m^2/g$ or less, more preferably 300 $m^2/g$ or less, further preferably 250 $m^2/g$ or less, from the viewpoints of fuel efficiency and processability. Besides, the $N_2SA$ of silica is measured by the above-described measuring method.

An average primary particle size of silica is preferably 24 nm or less, more preferably 22 nm or less, further preferably 20 nm or less, particularly preferably 18 nm or less. A lower limit value of the average primary particle size is, but not particularly limited to, preferably 1 nm or more, more preferably 3 nm or more, further preferably 5 nm or more, from the viewpoint of dispersibility of silica. Besides, the average primary particle size of silica is measured by the above-described measuring method.

A content of silica when compounded based on 100 parts by mass of the rubber component is preferably 10 parts by mass or more, more preferably 30 parts by mass or more, further preferably 50 parts by mass or more, from the viewpoint of the effects of the present invention. Moreover, the content is preferably 110 parts by mass or less, more preferably 100 parts by mass or less, further preferably 90 parts by mass or less, particularly preferably 80 parts by mass or less.

A total content of fillers based on 100 parts by mass of the rubber component is preferably 70 parts by mass or more, more preferably 80 parts by mass or more, further preferably 90 parts by mass or more, further preferably 100 parts by mass or more, particularly preferably 105 parts by mass or more, from the viewpoint of the effects of the present invention. Moreover, it is preferably 150 parts by mass or less, more preferably 140 parts by mass or less, further preferably 130 parts by mass or less, from the viewpoints of fuel efficiency and elongation at break.

(Other fillers)

Fillers other than silica and carbon black are not particularly limited, and, for example, those commonly used in the tire industry can be compounded such as aluminum hydroxide, alumina (aluminum oxide), calcium carbonate, magnesium sulfate, talc, clay, and the like. These other fillers may be used alone, or two or more thereof may be used in combination.

(Silane coupling agent)

Silica is preferably used in combination with a silane coupling agent. The silane coupling agent is not particularly limited, and any silane coupling agent used in combination with silica in the tire industry can be used, examples of which include, for example, mercapto-based silane coupling agents such as 3-mercaptopropyltrimethoxysilane, 3-mercaptopropyltriethoxysilane, 2-mercaptoethyltrimethoxysilane, and 2-mercaptoethyltriethoxysilane; sulfide-based silane coupling agents such as bis(3-triethoxysilylpropyl)disulfide and bis(3-triethoxysilylpropyl)tetrasulfide; thioester-based silane coupling agents such as 3-octanoylthio-1-propyltriethoxysilane, 3-hexanoylthio-1-propyltriethoxysilane, and 3-octanoylthio-1-propyltrimethoxysilane; vinyl-based silane coupling agents such as vinyltriethoxysilane and vinyltrimethoxysilane; amino-based silane coupling agents such as 3-aminopropyltriethoxysilane, 3-aminopropyltrimethoxysilane, and 3-(2-aminoethyl)aminopropyltriethoxysilane; glycydoxy-based silane coupling agents such as γ-glycidoxypropyltriethoxysilane and γ-glycidoxypropyltrimethoxysilane; nitro-based silane coupling agents such as 3-nitropropyltrimethoxysilane and 3-nitropropyltriethoxysilane; chloro-based silane coupling agents such as 3-chloropropyltrimethoxysilane and 3-chloropropyltriethoxysilane; and the like. Among them, sulfide-based silane coupling agents and/or mercapto-based silane coupling agents are preferably compounded. As the silane coupling agent, for example, those commercially available from Evonik Industries AG, Momentive Performance Materials, etc. can be used. The silane coupling agent may be used alone, or two or more thereof may be used in combination.

A content of a silane coupling agent based on 100 parts by mass of silica is preferably 1.0 part by mass or more, more preferably 3.0 parts by mass or more, further preferably 5.0 parts by mass or more, from the viewpoint of enhancing dispersibility of silica. Moreover, it is preferably 20 parts by mass or less, more preferably 15 parts by mass or less, further preferably 12 parts by mass or less, from the viewpoints of cost and processability.

<Plasticizer>

The rubber composition relating to the present embodiment preferably comprises a plasticizer. The plasticizer is a material that imparts plasticity to the rubber component, and has a concept that includes both a plasticizer in a liquid state at 25°C and a plasticizer that is solid at 25°C. Examples of the plasticizer include, a resin component, oil, a liquid rubber, an ester-based plasticizer, and the like. These plasticizers may be ones derived from mineral resources such as petroleum, a natural gas, and the like, or naphtha-derived ones recycled from a rubber product or a non-rubber product. Moreover, low-molecular-weight hydrocarbon components obtained by pyrolyzing used tires or products containing these agents and performing extraction from the pyrolysate may be used as plasticizers. The plasticizer may be used alone, or two or more thereof may be used in combination.

(Resin component)

The rubber composition relating to the present embodiment may comprise a resin component in combination. The resin component that can be used in the present embodiment is not particularly limited, and any resin commonly used in the tire industry can be used, examples of which include, for example, a C9-based resin, a C5-based resin, a C5/C9-based resin, a dicyclopentadiene-based resin, an aromatic vinyl-based resin, a coumarone-based resin, an indene-based resin, a terpene-based resin, a rosin-based resin, a phenol-based resin, and the like. These resin components may be used alone, or two or more thereof may be used in combination. Each resin component may also be used alone, respectively, or two or more thereof may be used in combination.

<<C9-based resin>>

A "C9-based resin" refers to a resin obtained by polymerizing C9 fractions, and may be a polymer obtained by polymerizing a C9 fraction alone or a copolymer obtained by copolymerizing a C9 fraction with other components. For example, resin obtained by copolymerizing dicyclopentadiene (DCPD) with a C9 fraction is referred to as a DCPD/C9 resin. Moreover, the C9-based resin may be one obtained by hydrogenating or modifying them. Examples of the C9 fraction include, for example, a petroleum fraction having 8 to 10 carbon atoms such as vinyltoluene, alkylstyrene, coumarone, indene, methylindene, dicyclopentadiene, and the like. As the C9-based resin, for example, those commercially available from BASF, Zeon Corporation, ENEOS Corporation, etc. can be used.

<<C5-based resin>>

A "C5-based resin" refers to resin obtained by polymerizing C5 fractions and may be one obtained by hydrogenating or modifying them. Examples of C5 fractions other than dicyclopentadiene include, for example, a petroleum fraction having 4 to 5 carbon atoms, such as cyclopentadiene, isoprene, piperylene, 2-methyl-1-butene, 2-methyl-2-butene, 1-pentene, and the like. As the C5-based resin, for example, those commercially available from STRUKTOL, Zeon Corporation, ENEOS Corporation, etc. can be used.

<<C5/C9-based resin>>

A "C5/C9-based resin" refers to a resin obtained by copolymerizing the C5 fraction and the C9 fraction and may be one obtained by hydrogenating or modifying them. As the C5/C9-based resin, for example, those commercially available from Tosoh Corporation, Zibo Luhua Hongjin New Material Group Co., Ltd, etc. can be appropriately used.

<<Dicyclopentadiene-based resin>>

A "dicyclopentadiene-based resin" refers to a resin comprising cyclopentadiene (CPD) and/or dicyclopentadiene (DCPD) as a monomer component having the largest content and may be one obtained by hydrogenating or modifying them. As the dicyclopentadiene-based resin, for example, a polymer obtained by polymerizing only dicyclopentadiene as a monomer, a copolymer obtained by copolymerizing dicyclopentadiene with the C9 fraction (DCPD/C9 resin), and the like are preferable. As the dicyclopentadiene-based resin, for example, those commercially available from Exxon Mobil Corporation, ENEOS Corporation, Zeon Corporation, Maruzen Petrochemical Co., Ltd., etc. can be used.

<<Aromatic vinyl-based resin>>

An "aromatic vinyl-based resin" refers to a resin comprising an aromatic vinyl compound such as styrene, $\alpha$-methylstyrene, vinyltoluene, p-chlorostyrene, and the like as a monomer component having the largest content, and may be one obtained by hydrogenating or modifying them. As the aromatic vinyl-based resin, a homopolymer of $\alpha$-methylstyrene or styrene or a copolymer of $\alpha$-methylstyrene and styrene is preferable, and a copolymer of $\alpha$-methylstyrene and

styrene is more preferable, because it is economical, easy to process, and excellent in heat generation. As the aromatic vinyl-based resin, for example, those commercially available from Kraton Corporation, Eastman Chemical Company, Mitsui Chemicals, Inc., etc. can be used.

<<Coumarone-based resin>>

A "coumarone-based resin" refers to a resin comprising coumarone as a monomer component and may be one obtained by hydrogenating or modifying it. As the coumarone-based resin, for example, a coumarone resin that is a polymer comprising only coumarone as a monomer component, a coumarone-indene resin that is a copolymer comprising coumarone and indene as monomer components, a coumarone-indene-styrene resin that is a copolymer comprising coumarone, indene, and styrene as monomer components, and the like are preferable. As the coumarone-based resin, for example, those commercially available from Rutgers Chemicals, Nitto Chemical Co., Ltd., Mitsui Chemicals, Inc., etc. can be used.

<<Indene-based resin>>

An "indene-based resin" refers to a resin comprising indene as a monomer component and may be one obtained by hydrogenating or modifying it. As the indene-based resin, for example, a coumarone-indene resin that is a copolymer comprising coumarone and indene as monomer components, a coumarone-indene-styrene resin that is a copolymer comprising coumarone, indene, and styrene as monomer components, and the like are preferable. As the indene-based resin, for example, those commercially available from Rutgers Chemicals, Nitto Chemical Co., Ltd., Mitsui Chemicals, Inc., etc. can be used.

<<Terpene-based resin>>

A "terpene-based resin" refers to a resin comprising a terpene compound such as $\alpha$-pinene, $\beta$-pinene, limonene, dipentene, and the like as a monomer component, and may be one obtained by hydrogenating or modifying them. As the terpene-based resin, for example, a polyterpene resin that is a polymer comprising only one or more of the terpene compounds as monomer components, an aromatic-modified terpene resin that is a copolymer comprising the terpene compound and an aromatic compound as monomer components, a terpene phenolic resin that is a copolymer comprising the terpene compound and a phenol compound as monomer components, and the like are preferable. Examples of the aromatic compound used as a monomer component for the aromatic-modified terpene resin include, for example, styrene, $\alpha$-methylstyrene, vinyltoluene, divinyltoluene, and the like. Examples of the phenol compound used as a monomer component for the terpene phenolic resin include, for example, phenol, bisphenol A, cresol, xylenol, and the like. As the terpene-based resin, for example, those commercially available from Yasuhara Chemical Co., Ltd., Arakawa Chemical Industries, Ltd., Nippon Terpene Chemicals, Inc., etc. can be used.

<<Rosin-based resin>>

A "rosin-based resin" refers to a resin comprising a rosin acid compound such as abietic acid, neoabietic acid, palustric acid, isopimaric acid, and the like, and may be one obtained by hydrogenating or modifying them. Example of the rosin-based resin include, but not particularly limited to, for example, a natural resin rosin and a rosin-modified resin obtained by modifying the natural resin rosin by hydrogenation, disproportionation, dimerization, esterification, etc., and the like. As the rosin-based resin, for example, those commercially available from Harima Chemicals Group, Inc., Arakawa Chemical Industries, Ltd., IREC Co., Ltd., etc. can be used.

<<Phenol-based resin>>

A "phenol-based resin" refers to a resin comprising a phenolic compound such as phenol, cresol, and the like as a monomer component, and may be one obtained by hydrogenating or modifying them. Examples of the phenol-based resin include, but not particularly limited to, a phenol formaldehyde resin, an alkylphenol formaldehyde resin, an alkylphenol acetylene resin, an oil-modified phenol formaldehyde resin, a terpene phenolic resin, and the like. As the phenol-based resin, for example, those commercially available from Sumitomo Bakelite Co., Ltd., DIC Corporation, ASAHI YUKIZAI CORPORATION, etc. can be used.

A softening point of a resin component is preferably 60°C or higher, more preferably 70°C or higher, further preferably 80°C or higher, from the viewpoint of grip performance. Moreover, it is preferably 150°C or lower, more preferably 140°C or lower, further preferably 130°C or lower, from the viewpoints of processability and improvement in dispersibility of a rubber component with a filler. Besides, the softening point of the resin component is measured by the above-described measuring method.

A content of a resin component based on 100 parts by mass of the rubber component is preferably 5 parts by mass or more, more preferably 10 parts by mass or more, further preferably 15 parts by mass or more, further preferably 20 parts by mass or more, further preferably 25 parts by mass or more, particularly preferably 30 parts by mass or more, from the viewpoint of the effects of the present invention. On the other hand, the content is preferably 80 parts by mass or less, more preferably 70 parts by mass or less, further preferably 60 parts by mass or less.

(Oil)

Examples of oil include, for example, a mineral oil, a vegetable oil, an animal oil, and the like. Moreover, from the viewpoint of life cycle assessment, those obtained by purifying a waste oil after being used in a rubber mixer or an engine, or a waste cooking oil used in a restaurant, may be used. Oil may be used alone, or two or more thereof may be used in combination.

In the present specification, a mineral oil refers to oil derived from mineral resources such as petroleum, a natural gas, and the like. Examples of the mineral oil include paraffinic oils (mineral oils), naphthenic oils, aromatic oils, and the like. Specific examples of the mineral oil include, for example, MES (Mild Extracted Solvate), DAE (Distillate Aromatic Extract), TDAE (Treated Distillate Aromatic Extract), TRAE (Treated Residual Aromatic Extract), RAE (Residual al Aromatic Extract), and the like. Moreover, as an environmental measure, an oil having a low content of a polycyclic aromatic compound (PCA) can also be used. Examples of the oil having a low content of a PCA content include MES, TDAE, a heavy naphthenic oil, and the like. The mineral oil may be used alone, or two or more thereof may be used in combination.

In the present specification, examples of the vegetable oil include, for example, a linseed oil, a rapeseed oil, a safflower oil, a soybean oil, a corn oil, a cottonseed oil, a rice oil, a tall oil, a sesame oil, a perilla oil, a castor oil, a tung oil, a pine oil, a pine tar oil, a sunflower oil, a coconut oil, a palm oil, a palm kernel oil, an olive oil, a camellia oil, a jojoba oil, a macadamia nut oil, a peanut oil, a grapeseed oil, a Japan wax, and the like. Furthermore, examples of the vegetable oil also include a refined oil obtained by refining the above-described oil (a salad oil, etc.), a transesterified oil obtained by transesterifying the above-described oil, a hydrogenated oil obtained by hydrogenating the above-described oil, a thermally polymerized oil obtained by thermally polymerizing the above-described oil, an oxidized polymerized oil obtained by oxidizing the above-described oil, a waste cooking oil obtained by recovering what was utilized as an edible oil, etc., and the like. Besides, the vegetable oil may be liquid or solid at 25°C. The vegetable oil may be used alone, or two or more thereof may be used in combination.

The vegetable oil relating to the present embodiment preferably comprises acylglycerol, and more preferably comprises triacylglycerol. Besides, in the present specification, acylglycerol refers to a compound in which a hydroxy group of glycerin and a fatty acid are ester-bonded. Acylglycerol is not particularly limited, and may be 1-monoacylglycerol, 2-monoacylglycerol, 1,2-diacylglycerol, 1,3-diacylglycerol, or triacylglycerol. Furthermore, acylglycerol may be a monomer, a dimer, or a multimer that is a trimer or higher. Besides, acylglycerol that is a dimer or higher can be obtained by thermal polymerization, oxidative polymerization, or the like. In addition, acylglycerol may be liquid or solid at 25°C.

As a method of confirming whether the rubber composition comprises acylglycerol, the confirmation can be performed by, but not particularly limited to, $^1$H-NMR measurement. For example, a heavy chloroform in which a rubber composition comprising triacylglycerol is immersed at 25°C for 24 hours and then removed is subjected to $^1$H-NMR at room temperature, and signals near 5.26 ppm, near 4.28 ppm, and near 4.15 ppm are observed under a condition that a signal of tetramethylsilane (TMS) is set to 0.00 ppm. The signals are presumed to be derived from hydrogen atoms bonded to carbon atoms adjacent to oxygen atoms of an ester group. Besides, "near" in this paragraph shall be a range of $\pm 0.10$ ppm.

The above-described fatty acid is not particularly limited and may be an unsaturated fatty acid or a saturated fatty acid. Examples of the unsaturated fatty acid include a monounsaturated fatty acid such as oleic acid and the like, and a polyunsaturated fatty acid such as linoleic acid, linolenic acid, and the like. Moreover, examples of the saturated fatty acid include butyric acid, lauric acid, and the like.

Among them, as the fatty acid, a fatty acid having few double bonds, that is, a saturated fatty acid or a monounsaturated fatty acid is desired, and oleic acid is preferable. As a vegetable oil comprising such fatty acid, for example, a vegetable oil comprising a saturated fatty acid or a monounsaturated fatty acid may be used, or a vegetable oil modified by transesterification or the like may be used. Moreover, in order to produce a vegetable oil comprising such fatty acid, a plant may be improved by selective breeding, gene recombination, genome editing, or the like.

As the vegetable oil, for example, those commercially available from Idemitsu Kosan Co., Ltd., Sankyo Yuka Kogyo K.K., ENEOS Corporation, Olisoy, H&R Group, Hokoku Corporation, Fuji Kosan Co., Ltd., The Nisshin OilliO Group, Ltd., etc. can be used.

Examples of the animal oil include a fish oil, a beef tallow, a whale oil, or an oleyl alcohol that may be derived therefrom, etc.

A content of oil when compounded based on 100 parts by mass of the rubber component is preferably 10 parts by mass or more, more preferably 20 parts by mass or more, further preferably 30 parts by mass or more, particularly preferably 35 parts by mass or more. Moreover, the content is preferably 100 parts by mass or less, more preferably 90 parts by mass or less, further preferably 80 parts by mass or less.

(Liquid rubber)

A liquid rubber is not particularly limited as long as it is a polymer in a liquid state at 25°C, examples of which include, for example, a liquid butadiene rubber (a liquid BR), a liquid styrene-butadiene rubber (a liquid SBR), a liquid isoprene rubber (a liquid IR), a liquid styrene-isoprene rubber (a liquid SIR), a liquid farnesene rubber, and the like. These liquid rubbers may be used alone, or two or more thereof may be used in combination.

(Ester-based plasticizer)

Examples of the ester-based plasticizer include, for example, dibutyl adipate (DBA), diisobutyl adipate (DIBA), dioctyl adipate (DOA), bis(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. The ester-based plasticizer may be used alone, or two or more thereof may be used in combination.

A content of a plasticizer based on 100 parts by mass of the rubber component (a total amount of all of a plurality of plasticizers when used in combination) is preferably 30 parts by mass or more, more preferably 40 parts by mass or more, further preferably 50 parts by mass or more, particularly preferably 60 parts by mass or more, from the viewpoint of the effects of the present invention. Moreover, the content is preferably 120 parts by mass or less, more preferably 110 parts by mass or less, further preferably 100 parts by mass or less.

<Other compounding agents>

The rubber composition relating to the present embodiment can appropriately comprise compounding agents conventionally and commonly used in the tire industry, for example, a vulcanized rubber particle, processing aid, wax, an antioxidant, stearic acid, zinc oxide, a vulcanizing agent, a vulcanization accelerator, and the like, in addition to rubber components, fillers, and plasticizers.

A vulcanized rubber particle is a particle made of a vulcanized rubber, and specifically, a rubber powder and the like specified in JIS K 6316:2017 can be used. From the viewpoints of environmental considerations and costs, a recycled rubber powder produced from a pulverized product of a waste tire or the like is preferable. The vulcanized rubber particle may be used alone, or two or more thereof may be used in combination.

The vulcanized rubber particle is not particularly limited and may be a non-modified vulcanized rubber particle or a modified vulcanized rubber particle.

As commercially available products of vulcanized rubbers, for example, products from Lehigh Technologies, Muraoka Rubber Reclaiming Co., Ltd., etc. can be used.

A content of a vulcanized rubber particle when compounded based on 100 parts by mass of the rubber component can be appropriately adjusted, for example, within a range of greater than 1 part by mass and less than 80 parts by mass.

Examples of processing aid include, for example, a fatty acid metal salt, a fatty acid amide, an amide ester, a silica surface active agent, a fatty acid ester, a mixture of a fatty acid metal salt and an amide ester, a mixture of a fatty acid metal salt and a fatty acid amide, and the like. These processing aid may be used alone, or two or more thereof may be used in combination. As processing aid, for example, those commercially available from Schill+Seilacher GmbH, Performance Additives, etc. can be used.

A content of processing aid when compounded based on 100 parts by mass of the rubber component is preferably 0.5 parts by mass or more, more preferably 1.0 parts by mass or more, further preferably 2.0 parts by mass or more, further preferably 3.0 parts by mass or more, particularly preferably 4.0 parts by mass or more, from the viewpoint of the effects of the present invention. Moreover, it is preferably 10 parts by mass or less, more preferably 8.0 parts by mass or less, from the viewpoints of abrasion resistance and breaking strength.

Wax is not particularly limited, and any of those commonly used in the tire industry can be appropriately used, examples of which include, for example, a mineral-based wax, a plant-derived wax, and the like. The mineral-based wax refers to wax derived from mineral resources such as oil, a natural gas, and the like. The plant-derived wax refers to wax derived from natural resources such as a plant and the like. Among them, the mineral-based wax is preferable. Examples of the plant-derived wax include, for example, a rice wax, a carnauba wax, a candelilla wax, and the like. Examples of the mineral-based wax include, for example, a paraffin wax, a microcrystalline wax, specially selected waxes thereof, and the like. Among them, a paraffin wax is preferable. Besides, wax relating to the present embodiment shall not comprise stearic acid. As wax, for example, those commercially available from Ouchi Shinko Chemical Industry Co., Ltd., Nippon Seiro Co., Ltd., Paramelt B.V., etc. can be used. These waxes may be used alone, or two or more thereof may be used in combination.

A content of wax when compounded based on 100 parts by mass of the rubber component is preferably 0.5 parts by mass or more, more preferably 1.0 parts by mass or more, further preferably 1.5 parts by mass or more, from the viewpoint of weather resistance of a rubber. Moreover, it is preferably 10 parts by mass or less, more preferably 5.0 parts by mass or less, from the viewpoint of preventing whitening of a tire due to bloom.

Examples of the antioxidant include, but not particularly limited to, a naphthylamine-based antioxidant such as phenyl-$\alpha$-naphthylamine and the like; a diphenylamine-based antioxidant such as an octylated diphenylamine, 4,4'-bis($\alpha$,$\alpha$'-dimethylbenzyl)diphenylamine, and the like; p-phenylenediamine-based antioxidant such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), N,N'-di-2-naphthyl-p-phenylenediamine (DNPD), and the like; a quinoline-based antioxidant such as a polymer of 2,2,4-trimethyl-1,2-dihydroquinoline and the like; a monophenol-based antioxidant such as 2,6-di-t-butyl-4-methylphenol, a styrenated phenol, and the like; bis-, tris-, and polyphenol-based antioxidants such as tetrakis-[methylene-3-(3',5'-di-t-butyl-4'-hydroxyphenyl)propionate]methane and the like. Among them, p-phenylenediamine-based antioxidants and quinoline-based antioxidants are preferable, and N-(1,3-dimethylbutyl)-N'-phenyl-p-phenylenediamine and a polymer of 2,2,4-trimethyl-1,2-dihydroquinoline are more preferable. As commercially available products, for example, products manufactured by Seiko Chemical Co., Ltd., Sumitomo Chemical Co., Ltd., Ouchi Shinko Chemical Industry Co., Ltd., Flexsys, etc. can be used. These antioxidants may be used alone, or two or more thereof may be used in combination.

A content of an antioxidant when compounded based on 100 parts by mass of the rubber component is preferably 0.5 parts by mass or more, more preferably 1.0 parts by mass or more, further preferably 1.5 parts by mass or more, from the viewpoint of ozone crack resistance of a rubber. Moreover, it is preferably 10 parts by mass or less, more preferably 5.0 parts by mass or less, from the viewpoints of abrasion resistance and wet grip performance.

A content of stearic acid when compounded based on 100 parts by mass of the rubber component is preferably 0.5 parts by mass or more, more preferably 1.0 parts by mass or more, further preferably 1.5 parts by mass or more, from the viewpoint of processability. Moreover, it is preferably 10 parts by mass or less, more preferably 5.0 parts by mass or less, from the viewpoint of vulcanization rate.

A content of zinc oxide when compounded based on 100 parts by mass of the rubber component is preferably 0.5 parts by mass or more, more preferably 1.0 parts by mass or more, further preferably 1.5 parts by mass or more, from the viewpoint of processability. Moreover, it is preferably 10 parts by mass or less, more preferably 5.0 parts by mass or less, from the viewpoint of abrasion resistance.

Sulfur is appropriately used as a vulcanizing agent. As sulfur, a powdery sulfur, an oil processing sulfur, a precipitated sulfur, a colloidal sulfur, an insoluble sulfur, a highly dispersible sulfur, and the like can be used. The vulcanizing agent may be used alone, or two or more thereof may be used in combination.

A content of sulfur when compounded as a vulcanizing agent based on 100 parts by mass of the rubber component is preferably 0.1 parts by mass or more, more preferably 0.3 parts by mass or more, further preferably 0.5 parts by mass or more, particularly preferably 0.7 parts by mass or more, from the viewpoint of securing a sufficient vulcanization reaction. Moreover, it is preferably 5.0 parts by mass or less, more preferably 4.0 parts by mass or less, further preferably 3.0 parts by mass or less, particularly preferably 2.5 parts by mass or less, from the viewpoint of preventing deterioration. Besides, a content of a vulcanizing agent when an oil-containing sulfur is used as the vulcanizing agent shall be a total content of pure sulfur comprised in the oil-containing sulfur.

As a vulcanizing agent other than sulfur, a known organic cross-linking agent can also be used. The organic cross-linking agent is not particularly limited as long as it can form cross-linked chains other than a polysulfide bond, examples of which, include, for example, an alkylphenol-sulfur chloride condensate, sodium hexamethylene-1,6-bisthiosulfate dihydrate, 1,6-bis(N,N'-dibenzylthiocarbamoyldithio)hexane, dicumylperoxide, and the like. As these organic cross-linking agents, those commercially available from Taoka Chemical Co., Ltd., LANXESS, Flexsys, etc. can be used.

Examples of a vulcanization accelerator include, but not particularly limited to, for example, a sulfenamide-based vulcanization accelerator, a thiazole-based vulcanization accelerator, a guanidine-based vulcanization accelerator, a thiuram-based vulcanization accelerator, a thiourea-based vulcanization accelerator, a dithiocarbamic acid-based vulcanization accelerator, an aldehyde-amine-based vulcanization accelerator, an aldehyde-ammonia-based vulcanization accelerator, an imidazoline-based vulcanization accelerator, a xanthate-based vulcanization accelerator, a caprolactam disulfide, and the like. These vulcanization accelerators may be used alone, or two or more thereof may be used in combination. Among them, one or more vulcanization accelerators selected from the group consisting of a sulfenamide-based vulcanization accelerator, a thiazole-based vulcanization accelerator, and a guanidine-based vulcanization accelerator are preferable, from the viewpoint that desired effects can be obtained more appropriately.

Examples of the sulfenamide-based vulcanization accelerator include, for example, N-tert-butyl-2-benzothiazolylsulfenamide (TBBS), N-cyclohexyl-2-benzothiazolylsulfenamide (CBS), N,N-dicyclohexyl-2-benzothiazolylsulfenamide (DCBS), and the like. Among them, TBBS and CBS are preferable.

Examples of the thiazole-based vulcanization accelerator include, for example, 2-mercaptobenzothiazole (MBT) or a salt thereof, di-2-benzothiazolyl disulfide (MBTS), 2-(2,4-dinitrophenyl)mercaptobenzothiazole, 2-(2,6-diethyl-4-morpholinothio)benzothiazole, and the like. Among them, MBTS and MBT are preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatecholborate, 1,3-di-o-cumenylguanidine, 1,3-di-o-biphenylguanidine, 1,3-di-o-cumenyl-2-propionylguanidine, and the like. Among them, DPG is preferable.

A content of a vulcanization accelerator when compounded based on 100 parts by mass of the rubber component is preferably 0.5 parts by mass or more, more preferably 0.7 parts by mass or more, further preferably 1.0 parts by mass or more, from the viewpoint of securing a sufficient vulcanization rate. Moreover, the content of the vulcanization accelerator is preferably 10 parts by mass or less, more preferably 5.0 parts by mass or less, from the viewpoint of suppressing blooming.

In the present specification, various materials comprising carbon atoms (for example, a rubber, oil, a resin component, a vulcanization accelerator, an antioxidant, a surfactant, etc.) may be derived from carbon dioxide in the atmosphere. As a method of obtaining the various materials from carbon dioxide, carbon dioxide may be directly converted, or methane obtained through a methanation step for synthesizing methane from carbon dioxide may be converted.

[Production of rubber composition and tire]

The rubber composition relating to the present embodiment can be produced by a known method. For example, it can be produced by kneading each of the above-described components using a rubber kneading apparatus such as an open roll, a closed type kneader (Bunbury mixer, kneader, etc.), and the like. The kneading step includes, for example, a base kneading step of kneading compounding agents and additives other than vulcanizing agents and vulcanization accelerators and a final kneading (F kneading) step of adding vulcanizing agents and vulcanization accelerators to the kneaded product obtained by the base kneading step and kneading them. Furthermore, the base kneading step can be divided into a plurality of steps, if desired.

A kneading condition is not particularly limited. Examples of kneading include, for example, in the base kneading step, a method of kneading at a discharge temperature at 150 to 170°C for 3 to 10 minutes, and in the final kneading step, a method of kneading at 70 to 110°C for 1 to 5 minutes. A vulcanization condition is not particularly limited. Examples of vulcanization include, for example, a method of vulcanizing at 150 to 200°C for 10 to 30 minutes.

The tire relating to the present embodiment, which comprises a tread part composed of the above-described rubber composition, can be produced by a usual method using corresponding rubber compositions, respectively. That is, an unvulcanized rubber composition corresponding to the tread part obtained by the above-described method is extruded into a shape of a tread part with an extruder equipped with a mouthpiece having a predetermined shape, which is then attached together with other tire members on a tire molding machine to be molded by a usual method, thereby forming an unvulcanized tire. This unvulcanized tire is heated and pressurized in a vulcanizer, whereby a tire relating to the present embodiment can be produced. A vulcanization condition is not particularly limited. Examples of vulcanization include, for example, a method of vulcanizing at 150 to 200°C for 10 to 30 minutes.

[Application of tire]

The tire relating to the present embodiment can be used as a tire for a passenger car, a heavy-duty tire, a tire for a large SUV, a tire for automated two-wheeled vehicle, or the like, and is preferably used as a tire for automated two-wheeled vehicle. A type of the tire when used as a tire for automated two-wheeled vehicle is not particularly limited, and it may be either a pneumatic tire or a solid tire, but it is preferably used as a pneumatic tire. Moreover, the tire can also be used for various applications such as an on-road tire, an off-road tire, a racing tire, and the like, and is appropriately used as a tire for automated two-wheeled vehicle for running in an uneven area.

EXAMPLES

Examples considered to be preferable in implementation (Examples) are shown below, though the scope of the present invention is not limited to Examples. Results calculated based on the following evaluation methods considering a tire comprising a tread part obtained according to the compounding in Tables 1, 2, and 3 using various chemicals shown below are shown in Tables 1, 2, and 3.

Various chemicals used in Examples and Comparative examples are collectively shown below.

SBR1: Nipol NS522 manufactured by ZS Elastomer Co., Ltd. (S-SBR, styrene content: 39% by mass, vinyl content: 40 mol%, Tg: -25°C, Mw: 1,200,000, comprising 37.5 parts by mass of an extending oil content based on 100 parts by mass of a rubber solid content)

SBR2: Tufdene 4850 manufactured by Asahi Kasei Corporation (unmodified S-SBR, styrene content: 40% by mass, vinyl content: 46 mol%, Tg: -25°C, Mw: 950,000, comprising 50 parts by mass of an extending oil content based on 100 parts by mass of a rubber solid content)

Carbon black: Show Black N220 manufactured by Cabot Japan K.K. ($N_2SA$: 111 $m^2/g$, average primary particle size: 22 nm)

Silica: ULTRASIL VN3 manufactured by Evonik Industries AG ($N_2SA$: 175 $m^2/g$, average primary particle size: 18 nm)

Silane coupling agent: Si266 manufactured by Evonik Industries AG (bis(3-triethoxysilylpropyl)disulfide)

Resin component: Nitto Resin Coumarone V-120 manufactured by Nitto Chemical Co., Ltd. (coumarone-indene resin, softening point: 120°C)

Wax: OZOACE 0355 manufactured by Nippon Seiro Co., Ltd (paraffin wax)

Antioxidant 1: Antigen 6C manufactured by Sumitomo Chemical Co., Ltd. (N-(1,3-dimethylbutyl)-N'-phenyl-p-phenylenediamine)

Antioxidant 2: Nocrac RD manufactured by Ouchi Shinko Chemical Industry Co., Ltd. (poly(2,2,4-trimethyl-1,2-dihydroquinoline))

Stearic acid: Bead stearic acid "CAMELLIA" manufactured by NOF CORPORATION

Zinc oxide: Ginrei R manufactured by Toho Zinc Co., Ltd.

Sulfur: HK-200-5 manufactured by Hosoi Chemical Industry Co., Ltd. (5% oil-containing powdered sulfur)

Vulcanization accelerator: Nocceler NS-G manufactured by Ouchi Shinko Chemical Industry Co., Ltd. (N-tert-butyl-2-benzothiazolylsulfenamide (TBBS))

(Examples and Comparative examples)

According to the compounding formulations shown in Tables 1, 2 and 3, using a 1.7 L closed Banbury mixer, all chemicals other than sulfur and vulcanization accelerators are kneaded until the temperature reaches a discharge temperature at 150°C to 160°C for 1 to 10 minutes to obtain a kneaded product. Next, using a twin-screw open roll, sulfur and vulcanization accelerators are added to the kneaded product, and the mixture is kneaded for 4 minutes until the temperature reaches 105°C to obtain an unvulcanized rubber composition. The unvulcanized rubber composition is used to be molded into a shape of a tread part, which is then attached together with other tire members, preparing an unvulcanized tire, and the unvulcanized tire is vulcanized at 170°C to obtain each test tire described in Table 1 (tire size: 120/90-19). Besides, the test tire shall form the basic structure shown in FIG. 1, have the tread pattern shown in FIG. 2, and be produced based on the specifications in Tables 1, 2 and 3.

<Measurement of acetone extraction amount (AE)>

An AE amount is measured for each of test pieces produced by being cut out from a tread part of each test tire. The AE amount is a value calculated by the following equation after immersing each vulcanized rubber test piece in acetone for 72 hours to extract a soluble component and measuring masses of each test piece before and after extraction, in accordance with JIS K 6229.

Acetone extraction amount (% by mass) = {(mass of rubber test piece before extraction - mass of rubber test piece after extraction) / (mass of rubber test piece before extraction)} $\times$ 100

<Measurement of ash content>

An ash content is measured for each of test pieces produced by being cut out from a tread part of each test tire. The "ash content" is calculated by the following equation after heating each test piece at 650°C for 4 hours under a nitrogen atmosphere in accordance with JIS K 6226-1:2003 and measuring masses of each test piece before and after heating.

(Ash content (% by mass))=(mass of test piece after heating/mass of test piece before heating)$\times$100

<Measurement of 70 tan $\delta$>

For each test piece produced by being cut out with 20 mm in length $\times$ 4 mm in width $\times$ 1 mm in thickness from a tread part of each test tire so that a tire circumferential direction becomes a long side and a tire radial direction becomes a thickness direction, using a dynamic viscoelasticity measuring device (EPLEXOR series manufactured by gabo Systemtechnik GmbH), a loss tangent tan $\delta$ is measured under a condition of a temperature at 70°C, a frequency of 10 Hz, an initial strain of 10%, a dynamic strain of ±1%, and an extension mode.

<Measurement of 75°C $M_{300}$>

For a dumbbell-shaped No. 7 test piece cut out with a thickness of 1 mm from a tread part of each test tire so that a tire circumferential direction becomes a tensile direction and a tire radial direction becomes a thickness direction, each tensile test is performed under a condition of a tensile speed of 3.3 mm/sec in an atmosphere of 75°C in accordance with JIS K 6251:2017 to measure a modulus $M_{300}$, in MPa, at 300% elongation.

<Measurement of rubber hardness Hs at 50°C>

For each test piece cut out from a shoulder block of each test tire so that a tire radial direction becomes a thickness direction, a Shore hardness is measured under a condition at a temperature of 50°C using a durometer type A in accordance with JIS K6253-3:2012. The measurement is performed by pressing a measuring instrument against the sample from the tire ground-contacting surface side of each test piece.

<Grip performance>

Each test tire is assembled into a standardized rim and mounted to a test vehicle under a condition of a standardized internal pressure. Test riders perform a sensory evaluation of control of stability with this test vehicle during running at a predetermined speed on a test course with an uneven road surface. The evaluations are performed using an integer value of 1 to 10 points, and based on evaluation criteria that the higher the score is, the better the stability of control during steering is, a total score by 10 test riders is calculated. A total score of the control tire (Comparative example 3) is converted into a reference value (100), and an evaluation result for each test tire is indicated as an index in proportion to the total score. The results show that the larger the numerical value is, the better the grip performance is.

Table 1

| | Example | | | |
|---|---|---|---|---|
| | 1 | 2 | 3 | 4 |
| Compounding amount (parts by mass) | | | | |
| SBR1 (Oil content) | 137.5 (37.5) | 137.5 (37.5) | 137.5 (37.5) | 137.5 (37.5) |
| SBR2 (Oil content) | - | - | - | - |
| Carbon black | 112 | 112 | 112 | 112 |
| Silica | - | - | - | - |
| Silane coupling agent | - | - | - | - |
| Resin component | 28 | 28 | 28 | 28 |
| Wax | 1.7 | 1.7 | 1.7 | 1.7 |
| Antioxidant 1 | 1.0 | 1.0 | 1.0 | 1.0 |
| Antioxidant 2 | 1.0 | 1.0 | 1.0 | 1.0 |
| Processing aid | 6.0 | 6.0 | 6.0 | 6.0 |
| Stearic acid | 2.0 | 2.0 | 2.0 | 2.0 |
| Zinc oxide | 2.8 | 2.8 | 2.8 | 2.8 |
| Sulfur | 1.3 | 1.3 | 1.3 | 1.3 |
| Vulcanization accelerator | 3.0 | 3.0 | 3.0 | 3.0 |
| Total styrene amount (% by mass) | 39 | 39 | 39 | 39 |
| Acetone extraction amount (% by mass) | 27 | 27 | 27 | 27 |
| Ash content (% by mass) | 1 | 1 | 1 | 1 |
| 70°C tan $\delta$ | 0.35 | 0.35 | 0.35 | 0.35 |
| 75°C $M_{300}$ (MPa) | 10.1 | 10.1 | 10.1 | 10.1 |
| Land ratio L (%) | 20 | 20 | 20 | 20 |

(continued)

| Compounding amount (parts by mass) | Example | | | |
|---|---|---|---|---|
| | 1 | 2 | 3 | 4 |
| Height of block H (mm) | 35 | 35 | 20 | 15 |
| Number of blocks in crown part | 20 | 20 | 20 | 20 |
| Protruding amount P of inner edge of shoulder block (mm) | 2.0 | 2.0 | 2.0 | 1.5 |
| Length A of tread surface of shoulder block in tire circumferential direction (mm) | 10 | 10 | 8.0 | 8.0 |
| Rubber hardness Hs of shoulder block | 62 | 62 | 62 | 62 |
| $(L^{0.5} \times 70°C\ tan\ \delta)/75°C\ M_{300}$ | 0.15 | 0.17 | 0.15 | 0.15 |
| $H/70°C\ tan\ \delta$ | 100 | 100 | 57 | 43 |
| $P \times A \times Hs$ | 1240 | 1240 | 992 | 744 |
| Grip performance | 150 | 150 | 160 | 160 |

Table 2

| Compounding amount (parts by mass) | Example | | | |
|---|---|---|---|---|
| | 5 | 6 | 7 | 8 |
| SBR1 (Oil content) | 137.5 (37.5) | 137.5 (37.5) | - | - |
| SBR2 (Oil content) | - | - | 150 (50) | 150 (50) |
| Carbon black | 53 | 53 | 112 | 90 |
| Silica | 60 | 60 | - | - |
| Silane coupling agent | 4.8 | 4.8 | - | - |
| Resin component | 28 | 28 | 28 | 35 |
| Wax | 1.7 | 1.7 | 1.7 | 1.7 |
| Antioxidant 1 | 1.0 | 1.0 | 1.0 | 1.0 |
| Antioxidant 2 | 1.0 | 1.0 | 1.0 | 1.0 |
| Processing aid | 6.0 | 6.0 | 6.0 | 8.0 |
| Stearic acid | 2.0 | 2.0 | 2.0 | 2.0 |
| Zinc oxide | 2.8 | 2.8 | 2.8 | 2.8 |
| Sulfur | 1.3 | 1.3 | 1.3 | 3.0 |
| Vulcanization accelerator | 3.0 | 3.0 | 3.0 | 6.0 |
| Total styrene amount (% by mass) | 39 | 39 | 40 | 40 |
| Acetone extraction amount (% by mass) | 26 | 26 | 30 | 35 |
| Ash content (% by mass) | 20 | 20 | 1 | 1 |
| $70°C\ tan\ \delta$ | 0.33 | 0.33 | 0.37 | 0.32 |
| $75°C\ M_{300}$ (MPa) | 9.5 | 9.5 | 8.3 | 10.8 |
| Land ratio L (%) | 20 | 20 | 20 | 20 |
| Height of block H (mm) | 15 | 15 | 15 | 15 |
| Number of blocks in crown part | 20 | 30 | 30 | 30 |
| Protruding amount P of inner edge of shoulder block (mm) | 2.0 | 2.0 | 2.0 | 2.0 |
| Length A of tread surface of shoulder block in tire circumferential direction (mm) | 8.0 | 10 | 10 | 10 |

(continued)

| | Example | | | |
|---|---|---|---|---|
| | 5 | 6 | 7 | 8 |
| Compounding amount (parts by mass) | | | | |
| Rubber hardness Hs of shoulder block | 61 | 61 | 59 | 53 |
| $(L^{0.5} \times 70°C \tan \delta)/75°C\ M_{300}$ | 0.16 | 0.16 | 0.20 | 0.13 |
| $H/70°C \tan \delta$ | 45 | 45 | 40 | 46 |
| $P \times A \times Hs$ | 976 | 1220 | 1180 | 1060 |
| Grip performance | 170 | 180 | 190 | 190 |

Table 3

| | Comparative example | | |
|---|---|---|---|
| | 1 | 2 | 3 |
| Compounding amount (parts by mass) | | | |
| SBR1 (Oil content) | 137.5 (37.5) | 137.5 (37.5) | 137.5 (37.5) |
| SBR2 (Oil content) | - | - | - |
| Carbon black | 60 | 60 | 112 |
| Silica | - | - | - |
| Silane coupling agent | - | - | - |
| Resin component | 28 | 28 | 28 |
| Wax | 1.7 | 1.7 | 1.7 |
| Antioxidant 1 | 1.0 | 1.0 | 1.0 |
| Antioxidant 2 | 1.0 | 1.0 | 1.0 |
| Processing aid | 6.0 | 6.0 | 6.0 |
| Stearic acid | 2.0 | 2.0 | 2.0 |
| Zinc oxide | 2.8 | 2.8 | 2.8 |
| Sulfur | 5.0 | 1.3 | 1.3 |
| Vulcanization accelerator | 3.0 | 3.0 | 3.0 |
| Total styrene amount (% by mass) | 39 | 39 | 39 |
| Acetone extraction amount (% by mass) | 32 | 33 | 27 |
| Ash content (% by mass) | 1 | 1 | 1 |
| $70°C \tan \delta$ | 0.20 | 0.27 | 0.35 |
| $75°C\ M_{300}$ (MPa) | 14.0 | 4.9 | 10.1 |
| Land ratio L (%) | 15 | 20 | 35 |
| Height of block H (mm) | 15 | 15 | 35 |
| Number of blocks in crown part | 30 | 30 | 20 |
| Protruding amount P of inner edge of shoulder block (mm) | 0.5 | 1.0 | 2.0 |
| Length A of tread surface of shoulder block in tire circumferential direction (mm) | 10 | 10 | 10 |
| Rubber hardness Hs of shoulder block | 49 | 41 | 62 |
| $(L^{0.5} \times 70°C \tan \delta)/75°C\ M_{300}$ | 0.06 | 0.24 | 0.20 |
| $H/70°C \tan \delta$ | 74 | 56 | 100 |
| $P \times A \times Hs$ | 245 | 820 | 1240 |

(continued)

| | Comparative example | | |
|---|---|---|---|
| | 1 | 2 | 3 |
| Compounding amount (parts by mass) | | | |
| Grip performance | 50 | 90 | 100 |

REFERENCE SIGNS LIST

1. Tire
2. Tread part
3. Sidewall part
4. Bead part
5. Bead core
6. Carcass layer
7. Belt layer
9. Groove bottom surface
10. Block
11. Shoulder block
12. Middle block
13. Crown block
14. Sipe
18. Virtual profile
20. Inner edge of tread surface of shoulder block in tire axial direction
21. Outer edge of tread surface of middle block in tire axial direction
29. Tread surface
30. Side surface
31. First side surface
32. Second side surface
33. Third side surface
34. Fourth side surface
40. Recessed part
40d. Bottom surface of recessed part
41. Recessed curved surface
C. Tire equator (Tire center line)
W1. Width of tread surface of shoulder block in tire axial direction
W2. Width of tread surface of middle block in tire axial direction
L. Length of tread surface of shoulder block in tire circumferential direction
P. Protruding amount of inner edge
RD. Tire rotation direction

Claims

1. A tire comprising a tread part provided with a plurality of blocks,

wherein the tread part is composed of a rubber composition comprising a rubber component, and
wherein L is less than 30, preferably less than 28, more preferably less than 26, further preferably greater than 12 and less than 24, 75°C $M_{300}$ is 5.0 or more, preferably 6.0 or more, more preferably 7.0 or more, further preferably 8.0 or more and 14.0 or less, and L, 70°C tan δ, and 75°C $M_{300}$ satisfy the following inequality (1):

$$(L^{0.5} \times 70°C \tan δ)/75°C M_{300} \geq 0.13 \quad (1)$$

where L represents a land ratio, in %, of the tread part, 70°C tan δ represents a tan δ at 70°C of the rubber composition, and 75°C M$_{300}$ represents a modulus, in MPa, at 300% elongation at 75°C of the rubber composition.

2. The tire of claim 1, wherein H/70°C tan $\delta$ is less than 95, preferably less than 85, more preferably greater than 25 and less than 75, where H represents a height, in mm, of the block.

3. The tire of claim 1 or 2, wherein the rubber composition comprises 50 parts by mass or more of silica based on 100 parts by mass of the rubber component.

4. The tire of any one of claims 1 to 3, wherein the tire has 25 or more blocks on a circumference of the tire, some or all of which are present in a crown part, where the crown part represent a region that is 30% of a grounding surface width of the tread part with a tire equator centered.

5. The tire of any one of claims 1 to 4, wherein a total styrene amount in the rubber component is 30% by mass or more.

6. The tire of any one of claims 1 to 5, wherein a total content of fillers based on 100 parts by mass of the rubber component in the rubber composition is 100 parts by mass or more.

7. The tire of any one of claims 1 to 6, wherein a content of a resin component based on 100 parts by mass of the rubber component in the rubber composition is 30 parts by mass or more.

8. The tire of any one of claims 1 to 7, wherein an acetone extraction amount of the rubber composition is 28% by mass or more.

9. The tire of any one of claims 1 to 8, wherein an ash content of the rubber composition is 15% by mass or more.

10. The tire of any one of claims 1 to 9,

 wherein the plurality of blocks include a plurality of shoulder blocks that form tread ends and a plurality of middle blocks that are adjacent to the shoulder blocks on an inner side in a tire axial direction, and
 wherein, in a meridian cross section including a tire rotation axis, inner edges of the shoulder blocks protrude on an outer side in a tire radial direction with respect to virtual profiles in which profiles of tread surfaces of the middle blocks are extended to the shoulder blocks.

11. The tire of claim 10, wherein P×A×Hs is greater than 800, preferably greater than 850 and less than 5000, more preferably greater than 900 and less than 3000, where P represents a protruding amount, in mm, of the inner edge, A represents a length, in mm, of a tread surface of the shoulder block in a tire circumferential direction, and Hs represents a rubber hardness at 50°C of the rubber composition constituting the shoulder blocks.

12. The tire of any one of claims 1 to **11,** wherein a pair of sipes extending without intersecting with each other are formed on a tread surface of any one of the plurality of blocks.

13. The tire of any one of claims 1 to 12, wherein the tire is a tire for automated two-wheeled vehicle.

# FIG.1

# FIG.2

# FIG.3

# FIG.4

| | Europäisches Patentamt European Patent Office Office européen des brevets | **EUROPEAN SEARCH REPORT** | Application Number EP 25 20 9941 |
|---|---|---|---|

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/111970 A1 (PIRELLI [IT]) 22 June 2023 (2023-06-22) | 1-7,13 | INV. B60C11/03 |
| A | * page 1, line 5 - page 2, line 17; claims 1-3, 5; figures 1A, 1B, 2 * <br> * page 9, lines 22, 23 * <br> * page 15, lines 12-15 * <br> * page 45, lines 15-20 * <br> * page 45, lines 5-8 * <br> * page 46, lines 29, 30 * <br> * page 48, lines 17-19 * <br> ----- | 8-12 | B60C11/11 B60C11/13 B60C1/00 B60C11/12 |
| A | EP 3 909 790 B1 (SUMITOMO RUBBER IND [JP]) 11 January 2023 (2023-01-11) * paragraphs [0018], [0020] - [0022], [0083], [0147], [0150]; claims 1, 13-15; figure 1 * ----- | 1-13 | |
| A | EP 4 344 902 A1 (SUMITOMO RUBBER IND [JP]) 3 April 2024 (2024-04-03) * paragraphs [0022], [0025], [0094] - [0096]; claims 1, 4; figure 1 * ----- | 1-13 | |
| | | | **TECHNICAL FIELDS SEARCHED (IPC)** <br><br> B60C |

The present search report has been drawn up for all claims

| Place of search | Date of completion of the search | Examiner |
|---|---|---|
| Munich | 27 March 2026 | Balázs, Matthias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 9941

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2026

| Patent document cited in search report | | Publication date | Patent family member(s) | | Publication date |
|---|---|---|---|---|---|
| WO 2023111970 | A1 | 22-06-2023 | CN | 118354911 A | 16-07-2024 |
| | | | EP | 4448304 A1 | 23-10-2024 |
| | | | JP | 2025500124 A | 09-01-2025 |
| | | | US | 2025050685 A1 | 13-02-2025 |
| | | | WO | 2023111970 A1 | 22-06-2023 |
| EP 3909790 | B1 | 11-01-2023 | CN | 113665299 A | 19-11-2021 |
| | | | EP | 3909790 A2 | 17-11-2021 |
| | | | JP | 7468130 B2 | 16-04-2024 |
| | | | JP | 2021178593 A | 18-11-2021 |
| | | | US | 2021354516 A1 | 18-11-2021 |
| EP 4344902 | A1 | 03-04-2024 | CN | 117774564 A | 29-03-2024 |
| | | | EP | 4344902 A1 | 03-04-2024 |
| | | | JP | 2024047778 A | 08-04-2024 |
| | | | US | 2024100886 A1 | 28-03-2024 |

EPO FORM P0459

For more details about this annex : see Official Journal of the European Patent Office, No. 12/82

## REFERENCES CITED IN THE DESCRIPTION

**Patent documents cited in the description**

- JP 2012136186 A
- EP 3427975 A
- JP 6856781 B
- EP 3173251 A
- JP 2009002594 A

**Non-patent literature cited in the description**

- *Rubber Chemistry and Technology*, 2012, vol. 85 (3), 408-449, 438, 440, 442
- A comparison of surface morphology and chemistry of pyrolytic carbon blacks with commercial carbon blacks. *Powder Technology*, 2005, vol. 160, 190-193
- *Akita Prefectural University Web Journal B*, 2019, vol. 6, 216-222